(19) Europäisches Patentamt
European Patent Office
Office européen des brevets

(11) EP 3 476 877 A1

(12) # EUROPEAN PATENT APPLICATION
published in accordance with Art. 153(4) EPC

(43) Date of publication:
**01.05.2019 Bulletin 2019/18**

(21) Application number: **17815013.2**

(22) Date of filing: **25.04.2017**

(51) Int Cl.:
***C08G 59/20*** (2006.01) ***C08G 59/40*** (2006.01)
***C08J 5/24*** (2006.01) ***C08K 7/02*** (2006.01)
***C08L 63/00*** (2006.01)

(86) International application number:
**PCT/JP2017/016267**

(87) International publication number:
**WO 2017/221542 (28.12.2017 Gazette 2017/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.06.2016 JP 2016125530**
**14.12.2016 JP 2016241872**

(71) Applicant: **Toray Industries, Inc.**
**Tokyo 103-8666 (JP)**

(72) Inventors:
- **OKA, Hideki**
**Nagoya-shi**
**Aichi 455-8502 (JP)**
- **HIRANO, Masanori**
**Nagoya-shi**
**Aichi 455-8502 (JP)**
- **TOMIOKA, Nobuyuki**
**Nagoya-shi**
**Aichi 455-8502 (JP)**

(74) Representative: **Mewburn Ellis LLP**
**City Tower**
**40 Basinghall Street**
**London EC2V 5DE (GB)**

(54) **TWO-PACK TYPE EPOXY RESIN COMPOSITION FOR FIBER-REINFORCED COMPOSITE MATERIAL, AND FIBER-REINFORCED COMPOSITE MATERIAL**

(57) There is provided a two-pack epoxy resin composition that is excellent in viscosity stability at a low temperature (40°C) of an epoxy resin composition after mixing preparation, retains low viscosity at the time of injection into reinforcing fiber and is excellent in impregnation property, and controls resin flow by appropriate increase in the resin viscosity after the impregnation, for example, can reduce burrs on the formed product, cures in a short time at the time of formation, and gives a fiber-reinforced composite material high in transparency of a cured product and excellent in formed product quality, and a fiber-reinforced composite material made by using the same.

The two-pack epoxy resin composition for a fiber-reinforced composite material of the present invention is a two-pack epoxy resin composition for a fiber-reinforced composite material containing the following components [A] to [E], in which the content of the component [A] is 5 to 45 parts by mass, the content of the component [B] is 5 to 50 parts by mass, and the content of the component [C] is 5 to 50 parts by mass, relative to 100 parts by mass of the total of the components [A], [B] and [C], and the fiber-reinforced composite material of the present invention is a fiber-reinforced composite material obtained by combining the two-pack epoxy resin composition for a fiber-reinforced composite material and a reinforcing fiber, and curing them.

• component [A]: an alicyclic epoxy resin
• component [B]: an aliphatic epoxy resin
• component [C]: a bisphenol type epoxy resin
• component [D]: an acid anhydride
• component [E]: a compound selected from the group consisting of quaternary ammonium salts, quaternary phosphonium salts, and imidazolium salts.



Printed by Jouve, 75001 PARIS (FR)

## Description

TECHNICAL FIELD

The present invention relates to a two-pack epoxy resin composition for use in a fiber-reinforced composite material, and a fiber-reinforced composite material made by using the same.

BACKGROUND ART

Fiber-reinforced composite materials made of reinforcing fibers and matrix resins allow material designs that make use of advantages of the reinforcing fibers and the matrix resins so that their use is being expanded to not only the aerospace field but also the sports field, the general industrial fields, and the like.

As reinforcing fibers, glass fibers, aramid fibers, carbon fibers, boron fibers and the like are used. Furthermore, as matrix resins, both thermosetting resins and thermoplastic resins are used, but thermosetting resins that easily impregnate the reinforcing fiber are often used. As thermosetting resins, epoxy resins, unsaturated polyester resins, vinyl ester resins, phenol resins, bismaleimide resins, cyanate resin and the like are used.

For production of fiber-reinforced composite materials, methods such as prepreg, hand lay-up, filament winding, pultrusion, and a RTM (resin transfer molding) process, are applied.

In recent years, as environment regulations for motor vehicles have been becoming stricter worldwide, domestic and foreign motor vehicle makers have been working on weight reduction of vehicle bodies, which influences fuel economy performance. Among them, application of carbon fiber composite materials, that are half of iron and about 70 percent of aluminum by mass, is being actively considered. Various members for motor vehicles are required to have lighter weights and also high rigidity and strength characteristics, and often have three-dimensional complicated shapes.

Therefore, the RTM process, which uses a high-rigidity and high-strength carbon fiber as a continuous fiber and is capable of coping with complicated shapes, is an effective forming method. The RTM process refers to a method of obtaining a fiber-reinforced composite material by closing an upper mold after a base made of reinforcing fiber is disposed, injecting a matrix resin through a resin injection opening to impregnate the reinforcing fiber, then curing the resin, opening the upper mold, and extracting the molded product. A major issue for the spread of carbon fiber composite materials to motor vehicles is productivity, and this serves as a barrier so that carbon fiber composite materials have been only adopted in some high-class automobiles.

In the hand lay-up, the filament winding, the pultrusion, and the RTM process, two-pack epoxy resin compositions are often used from the viewpoint of forming processability. The two-pack epoxy resin composition refers to an epoxy resin composition stored in a state in which a base resin pack containing an epoxy resin as a main component and a curing agent pack containing a curing agent as a main component are put in separate containers and, immediately before use, the two liquids, the base resin pack and the curing agent pack, are mixed for use.

In contrast, an epoxy resin composition handled in a state in which all the components, including a base resin and a curing agent, are mixed in one is referred to as one-pack epoxy resin composition. In the case of a one-pack epoxy resin composition, refrigerated storage is needed because a curing reaction also progresses during storage. Furthermore, a less reactive solid curing agent is often selected, and in order to impregnate a reinforcing fiber with a one-pack epoxy resin composition, the one-pack epoxy resin composition needs to be pushed in with high pressure by using a press roll or the like.

On the other hand, in the two-pack epoxy resin composition, since both a base resin pack and a curing agent pack are provided in a liquid form, an epoxy resin composition obtained by mixing the base resin pack and the curing agent pack can be also provided in a liquid form with low viscosity so that impregnation to a reinforcing fiber is easy. Furthermore, since the base resin pack and the curing agent pack can be separately stored, long-term storage thereof is also possible without any particular restriction on storage conditions.

To realize a high-level productivity as mentioned above, for example, in the RTM process, it is specifically required not only that the resin's curing time be short but also that four conditions (problems) as follows be simultaneously satisfied. First, the epoxy resin composition after mixing preparation is stable in viscosity for a long time being inhibited from increasing during storage at a low temperature of 40°C. That is, it is excellent in viscosity stability at a temperature of 40°C. Second, in the step of injecting the resin into the reinforcing-fiber base, the epoxy resin composition is low in viscosity and, during the injection step, increase in viscosity is inhibited, and thus the epoxy resin composition is excellent in impregnation to any base. Third, sufficient high-speed curing can be achieved in an intermediate-temperature range around 120°C, thereby allowing simplification of the forming equipment and eliminating the need for heat resistance of subsidiary materials and the like, and moreover, the resin itself is not colored so that both cost reduction and formed product quality are favorably achieved. Fourth, in the mold release step after forming, the resin has attained sufficient rigidity due to curing and can be released from the mold smoothly without causing strain, and moreover, strain and deformation are not generated even when undergoing a coating step.

In response to these problems, an epoxy resin composition for a fiber-reinforced composite material in which an alicyclic epoxy resin, a bifunctional or higher functional liquid epoxy resin as base resins, are combined with a bifunctional or higher functional reactive diluent, an acid anhydride curing agent, and an accelerator (see Patent Document 1), an epoxy resin composition for a solar cell encapsulant with excellent balance between transparency, flexibility and rigidity, in which an alicyclic epoxy resin and an aliphatic epoxy resin having a specific molecular weight are combined with a curing agent (see Patent Document 2), and a resin composition for light-emitting diode sealing with excellent light transmittance, ultraviolet resistance and heat resistance, in which a saturated aliphatic compound containing an alicyclic structure and a carboxylic acid anhydride group in an epoxy resin having an alicyclic structure and a quaternary phosphonium salt type curing accelerator (see Patent Document 3) have been proposed.

Furthermore, an epoxy resin composition with excellent balance between low-viscosity retention time and curing time in a constant temperature condition around 100°C, by using an epoxy resin composition in which an acid anhydride as a curing agent and an organophosphorus compound as an accelerating agent are combined, has been proposed (see Patent Document 4).

PRIOR ART DOCUMENTS

PATENT DOCUMENTS

Patent Document 1: Japanese Patent Laid-open Publication No. 2013-1711
Patent Document 2: Japanese Patent Laid-open Publication No. 2010-171069
Patent Document 3: Japanese Patent Laid-open Publication No. 2003-221490
Patent Document 4: WO 2007/125759 A

SUMMARY OF THE INVENTION

PROBLEMS TO BE SOLVED BY THE INVENTION

However, the resin plastic materials proposed in Patent Documents 1 to 3 were not capable of being sufficiently high-speed cured. Furthermore, in the resin plastic material proposed in Patent Document 4, it has been a problem that, when molding at a high temperature to shorten curing time, the cured product is colored.

Accordingly, an object of the present invention is to provide a two-pack epoxy resin composition that improves disadvantages of the above conventional technologies and is excellent in viscosity stability at a low temperature (e.g., 40°C) of an epoxy resin composition after mixing preparation, retains low viscosity at the time of injection into reinforcing fiber and is excellent in impregnation property, cures in a short time at the time of formation, and gives a fiber-reinforced composite material high in transparency of a cured product and excellent in formed product quality, and a fiber-reinforced composite material made by using the same.

SOLUTIONS TO THE PROBLEMS

The present invention is intended to solve the above problems, and one mode (referred to as Present Invention 1) of the two-pack epoxy resin composition for a fiber-reinforced composite material of the present invention is as follows.

That is, the two-pack epoxy resin composition for a fiber-reinforced composite material of the present invention contains the following components [A] to [E], and the content of the component [A] is 5 to 45% by mass, the content of the component [B] is 5 to 50% by mass, and the content of the component [C] is 5 to 50% by mass, relative to 100% by mass of the total of the components [A], [B] and [C] .

- component [A]: an alicyclic epoxy resin
- component [B]: an aliphatic epoxy resin
- component [C]: a bisphenol type epoxy resin
- component [D]: an acid anhydride
- component [E]: a compound selected from the group consisting of quaternary ammonium salts, quaternary phosphonium salts, and imidazolium salts.

According to a preferred mode of the two-pack epoxy resin composition for a fiber-reinforced composite material of Present Invention 1, the component [A] is 3,4,3',4'-diepoxybicyclohexyl.

In addition, another mode (referred to as Present Invention 2) of the two-pack epoxy resin composition for a

fiber-reinforced composite material of the present invention is as follows.

That is, the two-pack epoxy resin composition for a fiber-reinforced composite material of the present invention contains the following components [a], [C], [D] and [E], and the content of the component [a] is 15 to 70% by mass, relative to 100% by mass of the total of the components [a] and [C].

- component [a]: 3,4,3',4'-diepoxybicyclohexyl
- component [C]: a bisphenol type epoxy resin
- component [D]: an acid anhydride
- component [E]: a compound selected from the group consisting of quaternary ammonium salts, quaternary phosphonium salts, and imidazolium salts.

According to a preferred mode of the two-pack epoxy resin composition for a fiber-reinforced composite material of Present Invention 2, the two-pack epoxy resin composition further contains the component [B] aliphatic epoxy resin.

According to a preferred mode of the two-pack epoxy resin composition for a fiber-reinforced composite material of the present invention, the component [B] is an aliphatic epoxy resin having a molecular weight of 300 or less. Incidentally, Present Invention 1 and Present Invention 2 are sometimes collectively abbreviated as the present invention, which applies hereinafter as well.

According to a preferred mode of the two-pack epoxy resin composition for a fiber-reinforced composite material of the present invention, the component [E] is a quaternary phosphonium halide.

According to a preferred mode of the two-pack epoxy resin composition for a fiber-reinforced composite material of the present invention, the component [E] is a quaternary phosphonium bromide.

According to a preferred mode of the two-pack epoxy resin composition for a fiber-reinforced composite material of the present invention, the component [E] is a tetraphenylphosphonium halide.

According to a preferred mode of the two-pack epoxy resin composition for a fiber-reinforced composite material of the present invention, the content of the component [E] is 3 to 25 parts by mass relative to 100 parts by mass of the total of the components [A], [B] and [C], or the content of the component [E] is 3 to 25 parts by mass relative to 100 parts by mass of the total of the components [a] and [C].

According to a preferred mode of the two-pack epoxy resin composition for a fiber-reinforced composite material of the present invention, the component [C] is a bisphenol A type epoxy resin.

According to a preferred mode of the two-pack epoxy resin composition for a fiber-reinforced composite material of the present invention, the two-pack epoxy resin composition further contains a component [F] reinforcing fiber.

According to a preferred mode of the two-pack epoxy resin composition for a fiber-reinforced composite material of the present invention, the component [F] is a carbon fiber.

According to a preferred mode of the two-pack epoxy resin composition for a fiber-reinforced composite material of the present invention, the component [D] is an acid anhydride having an alicyclic structure.

Also, the fiber-reinforced composite material of the present invention is obtained by curing the two-pack epoxy resin composition for a fiber-reinforced composite material.

## EFFECTS OF THE INVENTION

According to the present invention, it is possible to obtain a two-pack epoxy resin composition for a fiber-reinforced composite material that is excellent in viscosity stability at a low temperature (e.g., 40°C) of an epoxy resin composition after mixing preparation retains, retains low viscosity at the time of injection into reinforcing fiber and is excellent in impregnation to any base, cures in a short time at the time of formation, excellent in heat resistance, and can provide a fiber-reinforced composite material high in transparency and excellent in formed product quality with high productivity.

Furthermore, because the two-pack epoxy resin composition for a fiber-reinforced composite material of the present invention cures in a short time at the time of formation and gives a high-quality fiber-reinforced composite material, it becomes possible to provide a high-quality fiber-reinforced composite material at high productivity by the RTM process or the like. This promotes application of the fiber-reinforced composite material particularly to motor vehicle usage so that fuel economy improvement by further weight reduction of motor vehicles and contribution to reduction of global warming gas emissions can be expected.

## EMBODIMENTS OF THE INVENTION

Next, desirable examples of the two-pack epoxy resin composition for a fiber-reinforced composite material of the present invention will be described in detail.

The two-pack epoxy resin composition for a fiber-reinforced composite material of Present Invention 1 contains

the following components [A] to [E], and the content of the component [A] is 5 to 45% by mass, the content of the component [B] is 5 to 50% by mass, and the content of the component [C] is 5 to 50% by mass, relative to 100% by mass of the total of the components [A], [B] and [C].

- component [A]: an alicyclic epoxy resin
- component [B]: an aliphatic epoxy resin
- component [C]: a bisphenol type epoxy resin
- component [D]: an acid anhydride
- component [E]: a compound selected from the group consisting of quaternary ammonium salts, quaternary phosphonium salts, and imidazolium salts.

First, the components of the two-pack epoxy resin composition for a fiber-reinforced composite material of Present Invention 1 will be described.

[Component [A]: Alicyclic Epoxy Resin]

The component [A] used in Present Invention 1 is an alicyclic epoxy resin. The alicyclic epoxy resin means an epoxy resin having a cyclohexene oxide structure represented by the following chemical formula

[Chemical formula 1]

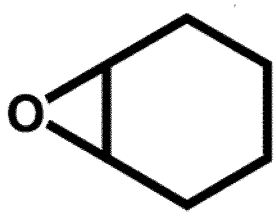

Examples of the alicyclic epoxy resin having a cyclohexene oxide structure that can be used as the component [A] in Present Invention 1 include vinyl cyclohexene dioxide, dipentene dioxide, 3,4-epoxycyclohexane carboxylic acid 3,4-epoxycyclohexylmethyl, bis(3,4-epoxycyclohexylmethyl) adipate, dicyclopentadiene dioxide, bis(2,3-epoxycyclopentyl) ether, ε-caprolactone-modified 3,4-epoxycyclohexenylmethyl-3',4'-epoxycyclohexenyl carboxylate, epoxidized butanetetracarboxylic acid tetrakis-(3-cyclohexenylmethyl)-modified ε-caprolactone, oligomers of 4-vinylcyclohexene dioxide, and 3,4,3',4'-diepoxybicyclohexyl, and the like.

By using an alicyclic epoxy resin as the component [A], even when the cyclohexene oxide structure is ring-opened to form a cured product, there are many cyclohexane structures in the cured product, so that an improvement in heat resistance is expected. In addition, most of the alicyclic epoxy resins have low viscosity, and the viscosity of the epoxy resin composition itself can be kept low by blending an alicyclic epoxy resin, and an improvement in impregnation to the base is expected.

In particular, by using 3,4,3',4'-diepoxybicyclohexyl represented by the following chemical formula as the component [A],

[Chemical formula 2]

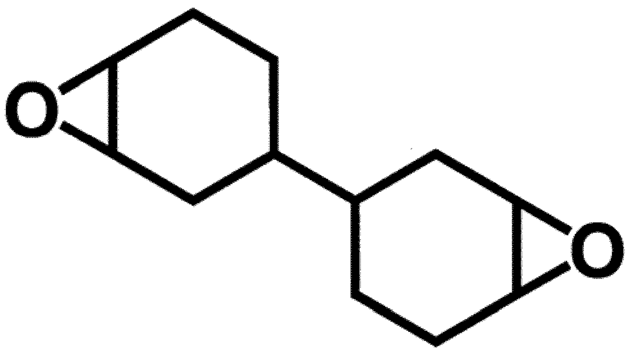

since the cyclohexane structures are single-bonded to each other, further improvement in heat resistance is expected, and also, the viscosity is lower, so that the viscosity of the epoxy resin composition itself can be kept low, and an improvement in impregnation to the base is expected.

[Component (B): Aliphatic Epoxy Resin]

The component [B] used in Present Invention 1 is an aliphatic epoxy resin. The aliphatic epoxy resin means an aliphatic glycidyl ether obtained from an alcohol having a plurality of hydroxyl groups.

Examples of the aliphatic epoxy resin that can be used as the component [B] in Present Invention 1 include diglycidyl ethers of ethylene glycol, diglycidyl ethers of propylene glycol, diglycidyl ethers of 1,4-butanediol, diglycidyl ethers of 1,6-hexanediol, diglycidyl ethers of neopentyl glycol, diglycidyl ethers of cyclohexane dimethanol, diglycidyl ethers of glycerol, triglycidyl ethers of glycerol, diglycidyl ethers of trimethylol ethane, triglycidyl ethers of trimethylol ethane, diglycidyl ethers of trimethylol propane, triglycidyl ethers of trimethylol propane, tetraglycidyl ethers of pentaerythritol, diglycidyl ethers of dodecahydrobisphenol A, diglycidyl ethers of dodecahydrobisphenol F, and the like.

By using an aliphatic epoxy resin as the component [B], the viscosity of the epoxy resin composition itself can be kept low, and an improvement in impregnation to the base is expected. From the viewpoint of improving the impregnation property, the aliphatic epoxy resin of the component [B] is preferably an aliphatic epoxy resin having a molecular weight of 300 or less, and more preferably an aliphatic epoxy resin having a molecular weight of 150 or more and 300 or less, and an aliphatic epoxy resin having a molecular weight of 170 or more and 260 or less is a particularly preferred mode.

Examples of the aliphatic epoxy resin having a molecular weight of 300 or less that can be used as the component [B] in Present Invention 1 include diglycidyl ethers of ethylene glycol, diglycidyl ethers of propylene glycol, diglycidyl ethers of 1,4-butanediol, diglycidyl ethers of 1,6-hexanediol, diglycidyl ethers of neopentyl glycol, diglycidyl ethers of cyclohexane dimethanol, diglycidyl ethers of glycerol, triglycidyl ethers of glycerol, diglycidyl ethers of trimethylol ethane, triglycidyl ethers of trimethylol ethane, diglycidyl ethers of diglycidyl ethers of trimethylol propane, and the like.

It is also a preferred mode that the two-pack epoxy resin composition for a fiber-reinforced composite material of Present Invention 2 contain the component [B] (aliphatic epoxy resin).

[Component [C]: Bisphenol Type Epoxy Resin]

The component [C] used in Present Invention 1 is a bisphenol type epoxy resin. The bisphenol type epoxy resin is a type of aromatic glycidyl ethers obtained from a phenol having a plurality of hydroxyl groups and is a glycidyl ether obtained from bisphenol.

By using a bisphenol type epoxy resin as the component [C], the viscosity of the epoxy resin composition and the balance of the dynamic properties such as heat resistance and elastic modulus of the obtained cured product can be made excellent.

Examples of the bisphenol type epoxy resin of the component (C) in Present Invention 1 include diglycidyl ethers of bisphenol A, diglycidyl ethers of bisphenol F, diglycidyl ethers of bisphenol AD, diglycidyl ethers of bisphenol S, and the like. Among them, since the bisphenol A type epoxy resin, which is a diglycidyl ether of bisphenol A, is particularly excellent in the balance of the above properties, it is particularly preferably used as the component [C] in the two-pack epoxy resin composition for a fiber-reinforced composite material of Present Invention 1.

As for the bisphenol type epoxy resin of the component [C], it is preferable that the number of repeating units be in the range of 0 to 0.2, and it is a more preferable mode that the number of repeating units be in the range of 0 to 0.1.

The number of repeating units corresponds to n in the chemical structural formula of the bisphenol type epoxy resin represented by the following chemical formula

[Chemical formula 3]

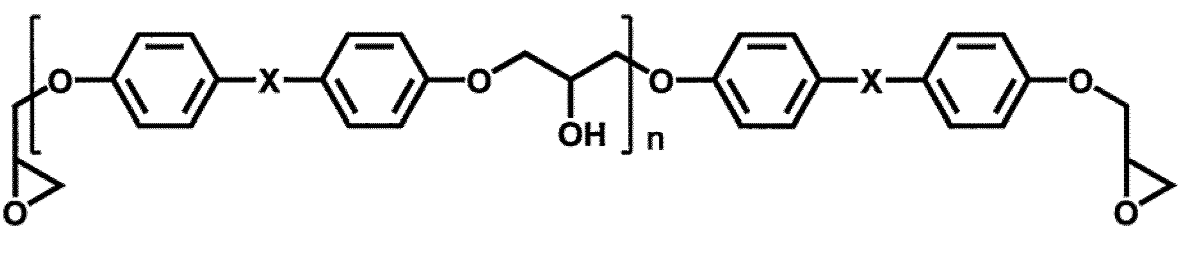

When the number of repeating units exceeds 0.2, the viscosity of the epoxy resin composition increases and

impregnation to the reinforcing fiber deteriorates and, in some cases, heat resistance of the obtained fiber-reinforced composite material is insufficient.

As for such a bisphenol type epoxy resin, it is preferable that its epoxy equivalent be in the range of 170 to 220, and it is a more preferred mode that the epoxy equivalent be in the range of 170 to 195. The epoxy equivalent is normally in a relation in which the epoxy equivalent becomes larger as the number of repeating units is larger, and becomes smaller as the number of repeating units is smaller. When the epoxy equivalent is less than 170, a low-molecular-weight impurity is sometimes contained, leading, in some cases, to deterioration of the surface quality due to volatilization at the time of forming. Furthermore, when the epoxy equivalent exceeds 220, the viscosity of the epoxy resin composition increases and impregnation to the reinforcing fiber deteriorates and, in some cases, the rigidity of the obtained fiber-reinforced composite material is insufficient.

In the two-pack epoxy resin composition for a fiber-reinforced composite material of Present Invention 1, it is important that the content of the components [A], [B] and [C] is such that the content of the component [A] is 5 to 45% by mass, the content of the component [B] is 5 to 50% by mass, and the content of the component [C] is 5 to 50% by mass, relative to 100% by mass of the total of the components [A], [B] and [C].

Further, the two-pack epoxy resin composition for a fiber-reinforced composite material of Present Invention 2 contains the following components [a], [C], [D] and [E], and the content of the component [a] is 15 to 70% by mass relative to 100% by mass of the total of the components [a] and [C].

- component [a]: 3,4,3',4'-diepoxybicyclohexyl
- component [C]: a bisphenol type epoxy resin
- component [D]: an acid anhydride
- component [E]: a compound selected from the group consisting of quaternary ammonium salts, quaternary phosphonium salts, and imidazolium salts.

That is, in Present Invention 2, the component [a] 3,4,3',4'-diepoxybicyclohexyl is contained as the component [A] of Present Invention 1, and further, the component [B] of the Present Invention 1 is an optional component. Further, as described above, in Present Invention 2, the content of the component [a] is 15 to 70% by mass relative to 100% by mass of the total of the components [a] and [C], but is preferably 15 to 45% by mass, and it is a more preferred mode that the content of the component [a] be 20 to 45% by mass.

[Other Epoxy Resins]

In addition to the above components [A] to [C], the two-pack epoxy resin composition for a fiber-reinforced composite material of Present Invention 1 may contain other epoxy resins as necessary, as long as the characteristics of the present invention are not impaired. Likewise, in addition to the above components [a] and [C], the two-pack epoxy resin composition for a fiber-reinforced composite material of Present Invention 2 may contain other epoxy resins as necessary, as long as the characteristics of the present invention are not impaired.

Examples of the epoxy resin other than the components [A], [a], [B] and [C] include aromatic glycidyl ethers obtained from a phenol having a plurality of hydroxyl groups, glycidyl amines obtained from an amine, glycidyl esters obtained from a carboxylic acid having a plurality of carboxylic groups, and the like.

Examples of aromatic glycidyl ethers include polyglycidyl ethers of novolacs obtained from phenol, alkyl phenol or the like, diglycidyl ethers of resorcinol, diglycidyl ethers of hydroquinone, diglycidyl ethers of 4,4'-dihydroxybiphenyl, diglycidyl ethers of 4,4'-dihydroxy-3,3',5,5'-tetramethylbiphenyl, diglycidyl ethers of 1,6-dihydroxynaphthalene, diglycidyl ethers of 9,9'-bis(4-hydroxyphenyl)fluorene, triglycidyl ethers of tris(p-hydroxyphenyl)methane, tetraglycidyl ethers of tetrakis(p-hydroxyphenyl)ethane, diglycidyl ethers having an oxazolidone skeleton obtained by reacting a diglycidyl ether of bisphenol A and a bifunctional isocyanate, and the like.

Examples of glycidyl amines include diglycidyl aniline, diglycidyl toluidine, triglycidyl aminophenol, tetraglycidyl diaminodiphenyl methane, tetraglycidyl xylylene diamine, halogen, alkyl substitutes and hydrogenated substances thereof, and the like.

Also, examples of glycidyl esters include phthalic acid diglycidyl ester, terephthalic acid diglycidyl ester, hexahydrophthalic acid diglycidyl ester, dimer acid diglycidyl ester, and the like.

[Component [D]: Acid Anhydride]

The component [D] used in the present invention is an acid anhydride. Specifically, the component [D] is a carboxylic acid anhydride, which acts as a curing agent for an epoxy resin. It is a desirable mode that there be four or less acid anhydride groups in an acid anhydride in one molecule.

As the acid anhydride of the component [D] used in the present invention, an acid anhydride having an aromatic

ring but not having an alicyclic structure, like phthalic anhydride, is used, and an acid anhydride having neither an aromatic ring structure nor an alicyclic structure, like succinic anhydride, is also used, but an acid anhydride having an alicyclic structure is preferably used, from the viewpoint of a low viscosity liquid state and easy handling, and heat resistance and mechanical properties of a cured product. Among the acid anhydrides having an alicyclic structure suitable as the component [D], acid anhydrides having a cycloalkane ring or a cycloalkene ring are more preferably used as the component [D].

Concrete examples of an acid anhydride having an alicyclic structure as described above include hexahydrophthalic acid anhydride, methylhexahydrophthalic acid anhydride, methyl-dihydro-nadic acid anhydride, 1,2,4,5-cyclopentane tetracarboxylic acid dianhydride, 1,2,3,6-tetrahydrophthalic acid anhydride, methyl-1,2,3,6-tetrahydrophthalic acid anhydride, nadic acid anhydride, methylnadic acid anhydride, bicyclo[2,2,2]oct-7-ene-2,3,5,6-tetracarboxylic acid dianhydride, 4-(2,5-dioxotetrahydrofuran-3-yl)-3-methyl-1,2,5,6-tetrahydrophthalic acid anhydride, and the like.

Among them, an acid anhydride selected from hexahydrophthalic acid anhydride, tetrahydrophthalic acid anhydride, nadic acid anhydride and alkyl substituted types thereof are excellent in the balance between the viscosity of the epoxy resin composition and the heat resistance and dynamic properties, such as elastic modulus, of the cured product obtained, and thus are preferably used as the component [D] in the present invention. Also, even when an acid anhydride having an alicyclic structure is used as the component [D], the two-pack epoxy resin composition for a fiber-reinforced composite material according to the present invention can further contain an acid anhydride that does not have an alicyclic structure.

The relationship between the contents of the components [A], [a], [B], and [C] and [D] in the two-pack epoxy resin composition for a fiber-reinforced composite material of the present invention is preferably such blended amounts that a ratio between the number of acid anhydride groups (H) in the component [D] and the total number of epoxy groups (E) in the components [A], [a], [B], and [C], the H/E ratio, satisfies the range of 0.8 to 1.1, and more preferably such blended amounts that the H/E ratio satisfies the range of 0.85 to 1.05, and it is a more preferred mode that the H/E ratio satisfies the range of 0.9 to 1.0. When the H/E ratio is less than 0.8, polymerization between epoxy resins present in excess may proceed, and bring about decreased physical properties of the cured product. Furthermore, when the H/E ratio exceeds 1.1, the curing agent component present in excess reduces the concentration of reactive sites in the system and lowers the reaction rate so that, in some cases, sufficiently rapid curability cannot be realized.

[Component [E]: Compound Selected from Group Consisting of Quaternary Ammonium Salts, Quaternary Phosphonium Salts and Imidazolium Salts]

The component [E] of the present invention is a compound selected from the group consisting of quaternary ammonium salts, quaternary phosphonium salts and imidazolium salts. These compounds act as a curing accelerator for developing fast curability.

It has been found that there is a feature (*) that, when the compound selected from the group consisting of quaternary ammonium salts, quaternary phosphonium salts and imidazolium salts is applied to the present invention, the viscosity increase after a base resin pack and a curing agent pack described below are mixed is small and stable, and the resin is excellent in impregnation to a reinforcing-fiber base when a fiber-reinforced composite material is formed and, on the other hand, the reaction rate during an intermediate-to-late period of a curing reaction is sufficiently high and the curing time can be shortened, and, furthermore, a colorless transparent cured product is obtained although the detailed mechanisms are not certainly known.

Next, the (i) quaternary ammonium salt, the (ii) quaternary phosphonium salt, and the (iii) imidazolium salt to be used as the component [E] will each be described in more detail below.

(i) Quaternary Ammonium Salt

A quaternary ammonium salt has, in addition to the foregoing feature (*), a tendency that the curing time is short although the viscosity increase at normal temperature after the base resin pack and the curing agent pack are mixed is particularly small, and therefore the quaternary ammonium salt is excellent in impregnation to a reinforcing-fiber base when a fiber-reinforced composite material is formed, and makes it possible to form a fiber-reinforced composite material at high productivity.

Concrete examples of the quaternary ammonium salt to be used as the component [E] in the present invention include quaternary ammonium oxo acid salts made of a quaternary ammonium cation and an oxo acid anion, quaternary ammonium halides made of a quaternary ammonium cation and an anion of a seventeenth group element, quaternary ammonium borate salts made of a quaternary ammonium cation and a borate anion that includes a boron, and the like.

Also, examples of the quaternary ammonium oxo acid salt include tetramethyl ammonium perchlorate, tetramethyl ammonium sulfate, tetramethyl ammonium acetate, tetramethyl ammonium hydrogen sulfate, tetraethyl ammonium nitrate, tetraethyl ammonium perchlorate, cetyl trimethyl ammonium perchlorate, hexadecyl trimethyl ammonium perchlorate, tetrabutyl ammonium perchlorate, tri-n-octylmethyl ammonium hydrogen sulfate, tetrabutyl ammonium acetate, tetrabutyl ammonium hydrogen sulfate, tetramethyl ammonium p-toluene sulfonate, tetraethyl ammonium p-toluene sulfonate, tetrabutyl ammonium salicylate, and the like.

In addition, examples of the quaternary ammonium halide include quaternary ammonium halides such as tetramethyl ammonium chloride, methyl triethyl ammonium chloride, tetraethyl ammonium chloride, tributyl methyl ammonium chloride, decyl trimethyl ammonium chloride, trimethyl-n-octyl ammonium chloride, lauryl trimethyl ammonium chloride, dodecyl trimethyl ammonium chloride, trimethyl dodecyl ammonium chloride, trimethyl myristyl ammonium chloride, tetradecyl trimethyl ammonium chloride, trimethyl tetradecyl ammonium chloride, tetrapropyl ammonium chloride, cetyl trimethyl ammonium chloride, hexadecyl trimethyl ammonium chloride, trimethyl octadecyl ammonium chloride, tri-n-octylmethyl ammonium chloride, dilauryl dimethyl ammonium chloride, tetrabutyl ammonium chloride, dimethyl dioctadecyl ammonium chloride, dimethyl distearyl ammonium chloride, tetrapentyl ammonium chloride, tetraamyl ammonium chloride, phenyl trimethyl ammonium chloride, benzyl trimethyl ammonium chloride, 1,1-dimethyl piperidinium chloride, phenyl benzyl dimethyl ammonium chloride, phenyl triethyl ammonium chloride, benzyl triethyl ammonium chloride, benzyl tributyl ammonium chloride, tetramethyl ammonium bromide, trimethyl propyl ammonium bromide, tetraethyl ammonium bromide, hexyl trimethyl ammonium bromide, decyl trimethyl ammonium bromide, trimethyl-n-octyl ammonium bromide, nonyl trimethyl ammonium bromide, lauryl trimethyl ammonium bromide, tetrapropyl ammonium bromide, myristyl trimethyl ammonium bromide, didecyl dimethyl ammonium bromide, dimethyl dioctyl ammonium bromide, cetyl trimethyl ammonium bromide, hexyl dimethyl octyl ammonium bromide, trimethyl heptadecyl ammonium bromide, trimethyl octadecyl ammonium bromide, trimethyl stearyl ammonium bromide, didodecyl dimethyl ammonium bromide, dimethyl ditetradodecyl ammonium bromide, tetrabutyl ammonium bromide, cetyl ethyl dimethyl ammonium bromide, ethyl hexadecyl dimethyl ammonium bromide, dimethyl distearyl ammonium bromide, dihexadecyl dimethyl ammonium bromide, tetrapentyl ammonium bromide, tetrahexyl ammonium bromide, tetraheptyl ammonium bromide, tetra(decyl)ammonium bromide, tetra-n-octyl ammonium bromide, phenyl trimethyl ammonium bromide, 1-butyl-1-methyl pyrrolidinium bromide, benzyl trimethyl ammonium bromide, 1-butyl-1-methyl piperidinium bromide, 1-methyl-1-propyl piperidinium bromide, benzyl triethyl ammonium bromide, benzyl dodecyl dimethyl ammonium bromide, tributyl benzyl ammonium bromide, tetramethyl ammonium iodide, ethyl trimethyl ammonium iodide, tetraethyl ammonium iodide, ethyl tripropyl ammonium iodide, tetrapropyl ammonium iodide, tetrabutyl ammonium iodide, dimethyl distearyl ammonium iodide, tetrahexyl ammonium iodide, tetrapentyl ammonium iodide, tetraheptyl ammonium iodide, tetra-n-octyl ammonium iodide, trimethylphenyl ammonium iodide, triethylphenyl ammonium iodide, benzyl triethyl ammonium iodide, and the like.

Further, examples of the quaternary ammonium borate salt include tetramethyl ammonium tetrafluoroborate, triethyl methyl ammonium tetrafluoroborate, tetraethyl ammonium tetrafluoroborate, cetyl trimethyl ammonium tetrafluoroborate, hexadecyl trimethyl ammonium tetrafluoroborate, tetrabutyl ammonium tetrafluoroborate, 1-ethyl-1-methyl pyrrolidinium tetrafluoroborate, tetrabutyl ammonium tetraphenyl borate, and the like.

Among the above quaternary ammonium salts, a quaternary ammonium halide is preferably used and quaternary ammonium bromide is more preferably used, from the viewpoint of solubility in the epoxy resin and the curing agent and costs.

(ii) Quaternary Phosphonium Salt

In addition to the foregoing feature (*), the quaternary phosphonium halide exhibits a viscosity behavior that, at a level that does not impair impregnation property, at temperature T1 of 30°C or more and 60°C or less, the viscosity after 10 minutes following the mixture of all components is 1.5 times or more and 2.5 times or less the viscosity after 1 minute following the mixture, and the viscosity after 20 minutes following the mixture is 1.0 times or more and 2.0 times or less the viscosity after 10 minutes following the mixture, and easily control flow of the resin, so that the quaternary phosphonium halide is preferably used as the component [E] in the present invention.

Recently, the shapes of formed products made of a fiber-reinforced composite material have become complicated and, to cope with that, mold dies have become complicated; for instance, a mold die is dividable into a plurality of parts. Therefore, there is a possibility that, after impregnating a reinforcing-fiber base at the time of forming a fiber-reinforced composite material, resin may enter small void spaces between parts of a mold die and result in increase in burrs on the formed product.

However, the resin viscosity appropriately increases after the impregnation, thereby resin flow is controlled, and for example, in the RTM process, it becomes less likely that resin enters small void spaces between parts of a mold die, so that burrs on the formed product can be reduced, and in the filament winding, the drooling of resin can be reduced.

Examples of the quaternary phosphonium salt to be used as the component [E] in the present invention include quaternary phosphonium oxo acid salts made of a quaternary phosphonium cation and an oxo acid anion, quaternary phosphonium halides made of a quaternary phosphonium cation and an anion of a seventeenth group element, quaternary phosphonium borates made of a quaternary phosphonium cation and a borate anion that includes a boron, a quaternary

phosphonium hexafluorophosphate made of a quaternary phosphonium cation and a phosphate anion, and the like.

Concrete examples of the quaternary phosphonium oxo acid salt to be used as the component [E] in the present invention include tetrakis(hydroxymethyl)phosphonium sulfate and the like.

Specific examples of the quaternary phosphonium halide to be used as the component [E] in the present invention include tetraethylphosphonium bromide, tributylmethylphosphonium iodide, tributyl(cyanomethyl)phosphonium chloride, tetrakis(hydroxymethyl)phosphonium chloride, tetrabutylphosphonium bromide, tetrabutylphosphonium chloride, tributyl-n-octylphosphonium bromide, tetra-n-octylphosphonium bromide, tributyldodecylphosphonium bromide, tributylhexadecylphosphonium bromide, methyltriphenylphosphonium iodide, methyltriphenylphosphonium bromide, methyltriphenylphosphonium chloride, tetraphenylphosphonium bromide, tetraphenylphosphonium chloride, tetraphenylphosphonium iodide, ethyltriphenylphosphonium bromide, ethyltriphenylphosphonium iodide, isopropyltriphenylphosphonium iodide, butyltriphenylphosphonium bromide, triphenylpropylphosphonium bromide, amyltriphenylphosphonium bromide, benzyltriphenylphosphonium chloride, benzyltriphenylphosphonium bromide, hexyltriphenylphosphonium bromide, heptyltriphenylphosphonium bromide, triphenyl(tetradecyl)phosphonium bromide, (1-naphthylmethyl)triphenylphosphonium chloride, allyltriphenylphosphonium bromide, allyltriphenylphosphonium chloride, acetonyltriphenylphosphonium chloride, (bromomethyl)triphenylphosphonium bromide, 3-bromopropyltriphenylphosphonium bromide, trans-2-butene-1,4-bis(triphenylphosphonium chloride), (tert-butoxycarbonylmethyl)triphenylphosphonium bromide, [(1H-benzotriazol-1-yl)methyl]triphenylphosphonium chloride, (chloromethyl)triphenylphosphonium chloride, (4-carboxybutyl)triphenylphosphonium bromide, cinnamyltriphenylphosphonium bromide, cyclopropyltriphenylphosphonium bromide, (4-chlorobenzyl)triphenylphosphonium chloride, (3-carboxypropyl)triphenylphosphonium bromide, (cyanomethyl)triphenylphosphonium chloride, (2-chlorobenzyl)triphenylphosphonium chloride, 2-dimethylaminoethyltriphenylphosphonium bromide, 2-(1,3-dioxan-2-yl)ethyltriphenylphosphonium bromide, 2-(1,3-dioxolan-2-yl)ethyltriphenylphosphonium bromide, (1,3-dioxolan-2-yl)methyltriphenylphosphonium bromide, (2,4-dichlorobenzyl)triphenylphosphonium chloride, (3,4-dimethoxybenzyl)triphenylphosphonium bromide, ethoxycarbonylmethyl(triphenyl)phosphonium bromide, 4-ethoxybenzyltriphenylphosphonium bromide, (formylmethyl)triphenylphosphonium chloride, (2-hydroxybenzyl)triphenylphosphonium bromide, (methoxymethyl)triphenylphosphonium chloride, (N-methyl-N-phenylamino)triphenylphosphonium iodide, methoxycarbonylmethyl(triphenyl)phosphonium bromide, (3-methoxybenzyl)triphenylphosphonium chloride, methyltriphenylphosphonium chloride, (4-nitrobenzyl)triphenylphosphonium bromide, phenacyltriphenylphosphonium bromide, triphenylpropargylphosphonium bromide, 2-(trimethylsilyl)ethoxymethyltriphenylphosphonium chloride, (3-trimethylsilyl-2-propynyl)triphenylphosphonium bromide, tributyl(1,3-dioxolan-2-ylmethyl)phosphonium bromide, triphenyl(2-thienylmethyl)phosphonium bromide, and the like.

Concrete examples of the quaternary phosphonium borate to be used as the component [E] in the present invention include di-tert-butylmethylphosphonium tetraphenylborate, di-tert-butyl(methyl)phosphonium tetrafluoroborate, tetraphenylphosphonium tetraphenylborate, tetraethylphosphonium tetrafluoroborate, tetrabutylphosphonium tetrafluoroborate, tetrabutylphosphonium tetraphenylborate, tri-tert-butylphosphonium tetraphenylborate, tri-tert-butylphosphonium tetrafluoroborate, tricyclohexylphosphonium tetrafluoroborate, tetraphenylphosphonium tetra-p-tolylborate, and the like.

Also, concrete examples of the quaternary phosphonium phosphate to be used as the component [E] in the present invention include (7-azabenzotriazol-1-yloxy)tris(dimethylamino)phosphonium hexafluorophosphate, 1H-benzotriazol-1-yloxytris(dimethylamino)phosphonium hexafluorophosphate, 1H-benzotriazol-1-yloxytripyrrolidinophosphonium hexafluorophosphate, bromotripyrrolidinophosphonium hexafluorophosphate, bromotris(dimethylamino)phosphonium hexafluorophosphate, chlorotripyrrolidinophosphonium hexafluorophosphate, tetraethylphosphonium hexafluorophosphate, tetrabutylphosphonium hexafluorophosphate, and the like.

Further, as the quaternary phosphonium salt to be used as the component [E] in the present invention, a quaternary phosphonium halide is preferably used, and quaternary phosphonium bromide or tetraphenylphosphonium halide is more preferably used, from the viewpoint of the solubility in the components [A] to [C] and the component [D], the cost, the above-described specific viscosity behavior development, and physical properties of the cured product.

(iii) Imidazolium Salt

An imidazolium salt has, in addition to the foregoing feature (*), a tendency that the curing time is short although the viscosity increase at normal temperature after the base resin pack and the curing agent pack are mixed is particularly small, and therefore the imidazolium salt is excellent in impregnation to a reinforcing-fiber base when a fiber-reinforced composite material is formed, and makes it possible to form a fiber-reinforced composite material at high productivity.

Concrete examples of the imidazolium salt to be used as the component [E] in the present invention include 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethane sulfonate, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-3-methylimidazolium tetrachloroferrate, 1-butyl-3-methylimidazolium iodide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1-butyl-3-methylimidazolium thiocyanate, 1-butyl-2,3-dimethylimidazolium trifluoromethane sulfonate, 1,3-dimethylimidazolium dimethylphosphate, 1,3-dimethylimidazolium chloride, 1,3-dimesitylimidazolium chloride, 1,3-bis(2,6-diisopropylphenyl)imidazolium chloride, 1,3-di(1-adamantyl)imidazolium tetrafluoroborate, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 2,3-dimethyl-1-propylimidazolium bis(trifluoromethanesulfonyl)imide, 1-decyl-3-methylimidazolium bis(trifluoromethanesulfonyl)imide, 1,3-dimethylimidazolium iodide, 1-ethyl-3-methylimidazolium chloride, 1-ethyl-3-methylimidazolium hexafluorophosphate, 1-ethyl-3-methylimidazolium trifluoromethane sulfonate, 1-ethyl-3-methylimidazolium tetrafluoroborate, 1-ethyl-3-methylimidazolium bromide, 1-ethyl-3-methylimidazolium iodide, 1-ethyl-3-methylimidazolium bis(trifluoromethanesulfonyl)imide, 1-ethyl-3-methylimidazolium ethyl sulfate, 1-ethyl-3-methylimidazolium p-toluene sulfonate, 1-ethyl-3-methylimidazolium dicyanamide, 1-ethyl-3-methylimidazolium tetrachloroferrate, 1-ethyl-2,3-dimethylimidazolium bis(trifluoromethanesulfonyl)imide, 1-ethyl-3-methylimidazolium hydrogen sulfate salt, 1-ethyl-3-methylimidazolium methane sulfonate, 1-ethyl-3-methylimidazolium trifluoro(trifluoromethyl)borate, 1-ethyl-3-methylimidazolium acetate, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium trifluoromethane sulfonate, 1-hexyl-3-methylimidazolium bromide, 1-hexyl-2,3-dimethylimidazolium iodide, 1-hexyl-3-methylimidazolium bis(trifluoromethanesulfonyl)imide, 1-(2-hydroxyethyl)-3-methylimidazolium tetrafluoroborate, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluene sulfonate, 1-methyl-3-[6-(methylthiohexyl]imidazolium p-toluene sulfonate, 1-methyl-3-n-octylimidazolium trifluoromethane sulfonate, 1-methyl-3-n-octylimidazolium tetrafluoroborate, and the like. Among these, imidazolium halides are preferably used from the viewpoint of solubility in the epoxy resin and the curing agent and costs.

In the case of Present Invention 1, the content of the component [E] used in the preferred mode of the present invention is preferably 3 to 25 parts by mass and more preferably 5 to 20 parts by mass, relative to 100 parts by mass of the total of the components [A], [B] and [C].
Also, in the case of Present Invention 2, it is preferably 3 to 25 parts by mass and more preferably 5 to 20 parts by mass, relative to 100 parts by mass of the total of the components [a] and [C].

When the component [E] is less than 3 parts by mass, the time required for curing is longer and, in some cases, sufficient rapid curability cannot be exhibited. On the other hand, when the component [E] is more than 25 parts by mass, the time for which low viscosity is maintained becomes shorter and, in some cases, impregnation to the reinforcing fiber is difficult. The use of the component [D] and the component [E] in appropriate blended amounts can more easily realize both achievement of curing speed improvement and viscosity stability at low temperature.

[Viscosity of Two-Pack Epoxy Resin Composition]

As for the two-pack epoxy resin composition for a fiber-reinforced composite material of the present invention, it is preferable that the foregoing components be properly blended so that, at a temperature of 40°C, the viscosity after 1 minute following the mixture of all components be set to 65 to 150 mPa·s, and it is a more preferred mode that the viscosity be set to 65 to 130 mPa·s. This is because the viscosity at the molding temperature can be lowered by setting the viscosity after 1 minute following the mixture of all components at a temperature of 40°C to 150 mPa·s or less, the injection time to the reinforcing-fiber base is shortened when forming a fiber-reinforced composite material, and the cause of the non-impregnation can be reduced. Furthermore, it is because, by setting the viscosity after 1 minute following the mixture of all components at a temperature of 40°C to 65 mPa·s or more, the viscosity at a molding temperature does not become excessively low and, and pits formed as air is taken in at the time of injection into the reinforcing-fiber base when forming a fiber-reinforced composite material can be prevented, thus occurrence of non-impregnated regions resulting from non-uniform impregnation can be prevented.

The viscosity in the present invention can be determined by measuring the viscosity immediately after the mixing preparation of the two-pack epoxy resin composition on the basis of a measurement method that uses a cone plate type rotational viscometer in ISO 2884-1 (1999). Examples of a measurement apparatus of viscosity include a TVE-33H type manufactured by Toki Sangyo Co.,Ltd, and the like. The viscosity immediately after the mixing preparation is the viscosity after 1 minute following the mixing preparation.

[Cure Index of Two-Pack Epoxy Resin Composition]

It is a preferable mode that the two-pack epoxy resin composition for a fiber-reinforced composite material of the present invention has a specific temperature T2 at which t90 satisfy the following (Formula 1) where t90 is a time at which the cure index determined by dielectric measurement when a fixed temperature is maintained is 90%.

$$\cdot\ 0.5 \leq t90 \leq 5 \quad \text{(Formula 1)}$$

wherein t90 represents the time (minutes) from the start of the measurement until the cure index reaches 90% at the specific temperature T2.

The dielectric measurement, despite not providing a univocal correspondence between viscosity and elastic modulus, is useful in determining the cure profile of a thermosetting resin that changes from a low viscosity liquid to a high elastic modulus amorphous solid. In the dielectric measurement, the cure profile is determined from a time-dependent change in the ion viscosity (equivalent resistivity) that is calculated from a complex permittivity measured by applying a high-frequency electric field to the thermosetting resin.

As a dielectric measurement apparatus, for example, a MDE-10 cure monitor manufactured by Holometrix-Micromet can be used. As for the measurement method, first, an O-ring made of Viton of 32 mm in inside diameter and 3 mm in thickness is set on a lower surface of a Programmable Minipress MP2000 with a TMS-1 inch type sensor embedded in the lower surface, and the temperature of the press is set to a predetermined temperature T. Next, an epoxy resin composition is poured into the inside of the O-ring, the press is closed, and time-dependent changes in the ion viscosity of the epoxy resin composition are tracked. The dielectric measurement is performed at frequencies of 1, 10, 100, 1000, and 10000 Hz, and logarithms Log($\sigma$) of frequency-independent ion viscosities are obtained using software (Eumetric) bundled with the apparatus.

The cure index at a time t required for curing is determined by the following formula (Formula 2). The time at which the cure index reaches 90% is defined as t90.

$$\cdot\ \text{Cure index} = \{\log(\alpha t) - \log(\alpha min)\}/\{\log(\alpha max) - \log(\alpha min)\} \times 100 \quad \text{(Formula 2)}$$

- Cure index: (unit: %)
- $\alpha$t: ion viscosity at time t (unit: $\Omega\cdot$cm)
- $\alpha$min: minimum value of ion viscosity (unit: $\Omega\cdot$cm)
- $\alpha$max: maximum value of ion viscosity (unit: $\Omega\cdot$cm)

The tracking of the ion viscosity by the dielectric measurement is relatively easy even when the curing reaction is rapid. Furthermore, the ion viscosity can be measured even after gelation, and has a characteristic of increasing with progress of curing and reaching a saturation as the curing is complete. Therefore, the ion viscosity can be used to track the progress of the curing reaction. As in the foregoing, the value obtained by standardizing logarithms of ion viscosities so that the minimum value is 0% and the saturated value (maximum value) is 100% is termed cure index, and used to describe the cure profile of a thermosetting resin. By using the time at which the cure index reaches 90% as an indicator concerning the curing time, preferable conditions such that curing can be accomplished in a short time can be described.

Considering the balance with the molding temperature described below, it is preferable that the molding temperature (heated cure temperature) of the epoxy resin composition, that is, the specific temperature T2, be in the range of 100 to 140°C. Setting the range of the specific temperature T2 to 100 to 140°C reduces the time required for curing and, at the same time, lessens the thermal shrinkage after mold release so that a fiber-reinforced composite material having good surface quality can be obtained.

[Blending of Two-Pack Epoxy Resin Composition]

The two-pack epoxy resin composition for a fiber-reinforced composite material of the present invention is obtained by, first, blending the base resin pack containing the components [A], [a], [B] and [C] and the curing agent pack containing the component [D] as a main component (the main component mentioned herein means that the main component is a component having the largest amount in the curing agent pack on the basis of mass), respectively in the foregoing blended amounts beforehand, and mixing the base resin pack and the curing agent pack immediately before use so that the aforementioned blended amounts are obtained. Although the foregoing component [E] can be blended in either the base resin pack or the curing agent pack, it is a more preferred mode that the component [E] be contained in the curing agent pack.

Other blending components can be blended in either the base resin pack or the curing agent pack, and can be blended in either one or both of them beforehand and then used. It is preferable that the base resin pack and the curing agent pack be heated separately before being mixed, and it is a preferred mode that a two-pack epoxy resin composition

be obtained by mixing the base resin pack and the curing agent pack immediately before use, such as injection into a molding die, from the standpoint of pot life of resin.

[Component [F]: Reinforcing Fiber]

The two-pack epoxy resin composition for a fiber-reinforced composite material of the present invention can contain a reinforcing fiber as the component [F] as necessary. As the reinforcing fiber of the component [F], glass fiber, aramid fiber, carbon fiber, boron fiber or the like is suitably used. Among them, carbon fiber is suitably used as the component [F], for the reason that a fiber-reinforced composite material that is excellent in dynamic properties, such as strength and elastic modulus, despite being light in weight.
Both short fibers and continuous fibers can be used as the reinforcing fibers, and both of them can be used in combination. In order to obtain a high-Vf fiber-reinforced composite material, continuous fiber is preferably used as the reinforcing fiber of the component [F].
When a continuous fiber is used as the reinforcing fiber, the reinforcing fiber is sometimes used in the configuration of strand but it is a preferred mode that the reinforcing fiber be used as a reinforcing-fiber base processed as a mat, a woven fabric, a knit, a blade, a unidirectional sheet, and the like. Among them, a woven fabric is suitably used because the woven fabric makes it relatively easy to increase the fiber volume fraction Vf (detailed later) of the fiber-reinforced composite material and is excellent in handling property. In that case, the higher the filling factor of the woven fabric, the easier it is to obtain a fiber-reinforced composite material having a high fiber volume fraction Vf. Therefore, the filling factor of the woven fabric is in the range of preferably 0.10 to 0.85, more preferably 0.40 to 0.85, and still more preferably 0.50 to 0.85.
The filling factor of the woven fabric is the ratio of a net volume of the reinforcing fiber to an apparent volume of the woven fabric and can be determined by the following formula.

$$\cdot\ W/(1000\ t\cdot\rho f)$$

wherein W represents basis weight (unit: $g/m^2$), t represents thickness (unit: mm), and ρf represents density of reinforcing fiber (unit: $g/cm^3$), respectively.
The basis weight and thickness of the woven fabric used here are determined in conformity with JIS R 7602 (1995).

[Fiber-Reinforced Composite Material]

By combining the two-pack epoxy resin composition for a fiber-reinforced composite material of the present invention and the reinforcing fiber that is the component [F], followed by curing the two-pack epoxy resin composition for a fiber-reinforced composite material, the fiber-reinforced composite material of the present invention is obtained. As a forming method for the fiber-reinforced composite material of the present invention, forming methods that use a two-pack epoxy resin composition such as hand lay-up, filament winding, pultrusion, and an RTM (resin transfer molding) process, are suitably used. Among these, the RTM molding process is particularly suitably used from the viewpoint of productivity and the degree of freedom in shape of the formed product. The RTM molding process is a molding method of obtaining a reinforcing fiber composite material by injecting resin into a reinforcing-fiber base disposed in a molding die and curing the resin.
Next, using the RTM molding process as an example, a method of producing the fiber-reinforced composite material of the present invention will be described. First, the two-pack epoxy resin composition for a fiber-reinforced composite material according to the present invention is obtained as described above. It is a preferred mode that the fiber-reinforced composite material of the present invention be produced by injecting a heated two-pack epoxy resin composition described above into a reinforcing-fiber base disposed in a molding die heated to a specific temperature T so that the composite impregnates the base and cures within the molding die.
The temperature to which the two-pack epoxy resin composition for a fiber-reinforced composite material is heated is determined from a relation between the initial viscosity and viscosity increase of the two-pack epoxy resin composition and is preferably 30 to 70°C and more preferably 40 to 60°C, from the standpoint of impregnation to a reinforcing-fiber base.
Moreover, the injection pressure for the two-pack epoxy resin composition for a fiber-reinforced composite material is usually 0.1 to 1.0 MPa but is preferred to be 0.1 to 0.6 MPa, from the standpoint of injection time and economy of equipment, although a VaRTM (vacuum assist resin transfer molding) process of injecting an epoxy resin composition while vacuuming the inside of the mold can be used. Furthermore, even when pressurized injection is performed, occurrence of voids can be inhibited when the inside of the mold is depressurized before the two-pack epoxy resin

composition is injected.

In the fiber-reinforced composite material of the present invention, the reinforcing fiber used is as described in [Component [F]: Reinforcing Fiber].

[Fiber Volume Fraction in Fiber-Reinforced Composite Material]

For the fiber-reinforced composite material of the present invention to have a high specific strength or specific elastic modulus, the fiber volume fraction Vf thereof is in the range of preferably 40 to 85% and more preferably 45 to 85%. The fiber volume fraction Vf of the fiber-reinforced composite material mentioned referred herein is a value defined as below and measured in conformity with ASTM D3171 (1999) and refers to a value in a state after the epoxy resin composition is injected into the reinforcing-fiber base and is cured. That is, measurement of the fiber volume fraction Vf of the fiber-reinforced composite material can be represented through the use of the following (Formula 3) with a thickness h of the fiber-reinforced composite material.

· Fiber volume fraction Vf (%) = $(Af \times N)/(\rho f \times h)/10$

(Formula 3)

wherein Af represents the mass of the fiber base (g/m$^2$) per sheet of 1 m$^2$, N represents the number of stacked sheets (sheets) of the fiber bases, ρf represents the density (g/cm$^3$) of the reinforcing fiber, and h represents the thickness (mm) of the fiber-reinforced composite material (test piece), respectively.

When the mass of the fiber base per sheet of 1 m$^2$ Af, the number of stacked sheets N of the fiber bases and the density ρf of the reinforcing fiber are not known, the fiber volume fraction in the fiber-reinforced composite material can be measured by one of a combustion method, nitric acid decomposition method, and sulfuric acid decomposition method based on JIS K 7075 (1991). As the density of the reinforcing fiber used in this case, a value measured on the basis of JIS R 7603 (1999) is used.

A concrete measurement method for the thickness h of the fiber-reinforced composite material is a method capable of correctly measuring the thickness of the fiber-reinforced composite material, and measurement is performed using a micrometer prescribed in JIS B 7502 (1994) or a one having accuracy equal to or higher than that, as mentioned in JIS K 7072 (1991). When a fiber-reinforced composite material is in a complicated shape so that measurement cannot be carried out, samples (samples having certain shape and size for measurement) are cut out from the fiber-reinforced composite material to perform measurement.

The fiber-reinforced composite material of the present invention is excellent in dynamic characteristics, such as strength and elastic modulus, despite being light in weight. Therefore, the fiber-reinforced composite material can be preferably used for structure members, outer plates and the like, of aircrafts, space satellites, industrial machines, railway vehicles, ships and boats, motor vehicles and the like. Further, since the fiber-reinforced composite material of the present invention is excellent in color tone and surface quality, it is particularly preferably employed for use as motor vehicle outer plates.

[Examples]

Next, using examples, the two-pack epoxy resin composition for a fiber-reinforced composite material and the fiber-reinforced composite of the present invention material will be described further in detail.

<Resin Raw Materials>

To obtain two-pack epoxy resin composition of examples, the following resin raw materials were used. The units of content rates in epoxy resin compositions in tables mean "parts by mass" unless otherwise mentioned.

1. Epoxy Resin

- "CELLOXIDE" (registered trademark) 2021P (manufactured by Daicel Corporation): alicyclic epoxy resin, 3,4-epoxycyclohexane carboxylic acid 3,4-epoxycyclohexylmethyl, epoxy equivalent of 137
- "CELLOXIDE" (registered trademark) 3000 (manufactured by Daicel Corporation): alicyclic epoxy resin, dipentene dioxide, epoxy equivalent of 93.5

- "CELLOXIDE" (registered trademark) 8000 (manufactured by Daicel Corporation): alicyclic epoxy resin, 3,4,3',4'-diepoxybicyclohexyl, epoxy equivalent of 100
- "HELOXY"™ Modifier 67 (manufactured by Hexion): aliphatic epoxy resin, diglycidyl ether of 1,4-butanediol, epoxy equivalent of 130, molecular weight of 202
- "HELOXY"™ Modifier 68 (manufactured by Hexion): aliphatic epoxy resin, diglycidyl ether of neopentyl glycol, epoxy equivalent of 135, molecular weight of 216
- "HELOXY"™ Modifier 107 (manufactured by Hexion): aliphatic epoxy resin, diglycidyl ether of cyclohexanedimethanol, epoxy equivalent of 159, molecular weight of 256
- "Epotohto" (registered trademark) YD-128 (manufactured by NIPPON STEEL & SUMIKIN CHEMICAL CO., LTD.): bisphenol A type epoxy resin, epoxy equivalent of 189
- "Epotohto" (registered trademark) YDF-170 (manufactured by NIPPON STEEL & SUMIKIN CHEMICAL CO., LTD.): bisphenol F type epoxy resin, epoxy equivalent of 170

2. Acid Anhydride

- HN-5500 (manufactured by Hitachi Chemical Co., Ltd.): methylhexahydrophthalic acid anhydride
- "KAYAHARD" (registered trademark) MCD (manufactured by Nippon Kayaku Co., Ltd.): methylnadic acid anhydride

3. Quaternary Ammonium Salt, Quaternary Phosphonium Salt, Imidazolium Salt

- tetramethylammonium bromide (manufactured by Tokyo Chemical Industry Co., Ltd.)
- tetraphenylphosphonium bromide (manufactured by Tokyo Chemical Industry Co., Ltd.)
- ethyltriphenylphosphonium bromide (manufactured by Tokyo Chemical Industry Co., Ltd.)
- tetraphenylphosphonium chloride (manufactured by Tokyo Chemical Industry Co., Ltd.)
- 1-butyl-3-methylimidazolium chloride (manufactured by Tokyo Chemical Industry Co., Ltd.)

4. Other Substances

- metaxylene diamine (manufactured by Tokyo Chemical Industry Co., Ltd.)
- tri-p-tolyl phosphine (manufactured by Tokyo Chemical Industry Co., Ltd.)
- 1,2-dimethyl imidazole (manufactured by SHIKOKU CHEMICALS

CORPORATION)

<Preparation of Epoxy Resin Composition>

According to blending ratios mentioned in Tables 1 to 5, epoxy resins were blended to provide base resin packs. At blending ratios mentioned in Tables 1 to 5, various acid anhydrides of the component [D] and quaternary ammonium salt, quaternary phosphonium salt, imidazolium salt of the component [E] and other substances were blended to provide curing agent packs. Using these base resin packs and curing agent packs, the materials were mixed at blending ratios mentioned in Tables 1 to 5 to prepare epoxy resin compositions.

<Measurement of Viscosity of Epoxy Resin Compositions>

In conformity with the measurement method that uses a cone-plate type rotational viscometer in ISO 2884-1 (1999), the viscosity of each epoxy resin composition after mixing preparation were measured, and were used as indicators of viscosity stability. As for an device, a TVE-33H type manufactured by Toki Sangyo Co.,Ltd. was used. Here, a rotor of 1°34' × R24 was used, the measurement temperature was 40°C, and the sample amount was 1 $cm^3$.

<Dielectric Measurement>

Dielectric measurement was performed to track the curing of epoxy resin. As a dielectric measurement apparatus, a MDE-10 cure monitor manufactured by Holometrix-Micromet was used. An O-ring made of Viton of 32 mm in inside diameter and 3 mm in thickness was set on a lower surface of a Programmable Minipress MP2000 with a TMS-1 inch type sensor embedded in the lower surface, and the temperature of the press was set to 120°C. The epoxy resin composition was poured into the inside of the O-ring, the press was closed, and time-dependent changes in the ion viscosity of the epoxy resin composition were tracked. The dielectric measurement was performed at frequencies of 1, 10, 100, 1000, and 10000 Hz, and logarithms Log(α) of frequency-independent ion viscosities were obtained using a bundled software.

Next, the cure index was determined using the following (Formula 2), and the times t10 and t90 at which the cure index reached 10% and 90% were determined.

$$\cdot \text{ Cure index} = \{\log(\alpha t) - \log(\alpha min)\}/\{\log(\alpha max) - \log(\alpha min)\} \times 100 \quad \text{(Formula 2)}$$

- Cure index: (unit: %)
- αt: ion viscosity at time t (unit: Ω·cm)
- αmin: minimum value of ion viscosity (unit: Ω·cm)
- αmax: maximum value of ion viscosity (unit: Ω·cm)

<Creation of Cured Resin Plate>

A 2 mm thick spacer made of copper obtained by cutting out a square having sides of 50 mm was set on a lower surface of a press apparatus, the temperature of the press was set to 120°C, and the epoxy resin composition was poured to the inner side of the spacer, then the press was closed. After 20 minutes, the press was open to obtain a resin cured plate.

<Measurement of Glass Transition Temperature Tg of Resin Cured Product>

A test piece of about 10 mg was cut out from the resin cured plate and sealed in an aluminum sample pan, and Tg was measured using a DSC (Differential Scanning Calorimetry) apparatus (Diamond DSC, manufactured by Perkin Elmer). A measurement condition was a temperature increase speed of 10°C/min. The temperature was raised twice in the temperature range of 0 to 250°C, and the temperature at which the baseline shifted at the second temperature rise was defined as Tg.

<Coloring of Resin Cured Product>

With regard to the foregoing resin cured plate, the presence or absence of coloration was determined. Concretely, using a 30 mm-square and 2 mm-thick test piece cut out from the resin cured plate, the color tone of the resin cured product was represented in the L*a*b color system by employing a spectrophotometer (CM-700d manufactured by Konica Minolta, Inc.). The L*a*b color system is a system used to represent colors of substances in which L* represents lightness and a* and b* represent chromaticity. Here, a* indicates the red direction, -a* the green direction, b* the yellow direction, and -b* the blue direction. As for measurement conditions, spectral transmittance was measured in the wavelength range of 380 to 780 nm in the conditions of a D65 light source and a field of view of 10° without inclusion of regular reflected light. At this time, results with $|a^*| \leq 2$ and $|b^*| \leq 5$ were determined as being "without coloration" and the other results were determined as being "with coloration".

<Preparation of Fiber-Reinforced Composite Material>

As fiber-reinforced composite materials for dynamic tests, fiber-reinforced composite materials prepared by the RTM molding process mentioned below were used.

In a mold die having a planar cavity of 350 mm × 700 mm × 2 mm, 9 sheets of carbon fiber woven fabric CO6343 (carbon fiber: T300-3K, texture: plain weave, basis weight: 198 g/m$^2$, manufactured by Toray Industries, Inc.) as reinforcing fiber were stacked within the cavity, and mold clamping was carried out by a press apparatus. Next, the inside of the mold die kept at a temperature (molding temperature) of 100°C was depressurized to atmospheric pressure -0.1 MPa by a vacuum pump. The base resin pack and the curing agent pack of an epoxy resin composition pre-heated beforehand to a temperature of 50°C were mixed and injected at a pressure of 0.2 MPa by using a resin injector. At 20 minutes after the injection of the epoxy resin composition was started, the mold die was opened and mold release was

carried out to obtain a fiber-reinforced composite material.

<Resin Impregnation to Reinforcing Fiber>

With regard to the impregnation property in the resin injection step during the preparation of the fiber-reinforced composite material mentioned above, comparative evaluation was carried out on the basis of the following three grades with reference to the amount of void in the fiber-reinforced composite material. An impregnation property such that the amount of void in a fiber-reinforced composite material was less than 1%, that is, void was substantially not present, was determined as "A", an impregnation property such that a not-resin-impregnated portion was not recognized in the external appearance of a fiber-reinforced composite material but the amount of void in the fiber-reinforced composite material was 1% or more was determined as "B", an impregnation property such that a not-resin-impregnated portion was recognized in the external appearance of a fiber-reinforced composite material was determined as "C", and "A" and "B" were determined as acceptable.

The amount of void in the fiber-reinforced composite material was calculated from an area ratio of the void in the fiber-reinforced composite material in the observation of a smoothly polished fiber-reinforced composite material cross section under an epi-illumination optical microscope.

<Ease of Mold Release Operation of Fiber-Reinforced Composite Material>

With regard to the ease of operation in the mold release step during the preparation of the fiber-reinforced composite material mentioned above, comparative evaluation was carried out on the basis of the following three grades. An ease of operation such that when the mold die was opened and the fiber-reinforced composite material was detached from the mold die by using a spatula, mold release was easy without resistance was determined as "A", an ease operation such that mold release was carried out with some resistance but without the fiber-reinforced composite material being plastically deformed (which was practically inferior to "A" because the mold release operation required time) was determined as "B", an ease of operation such that mold release was difficult or, at the time of mold release, the fiber-reinforced composite material was plastically deformed was determined as "C", and "A" and "B" were determined as acceptable.

<With Regard to Inhibition of Occurrence of Burrs on Fiber-Reinforced Composite Material>

With regard to occurrence of burrs on the fiber-reinforced composite materials manufactured by the foregoing method, comparative evaluation was carried out on the basis of the following three grades. Such inhibition that no burr was formed was determined as "A", such inhibition that burrs were slightly formed was determined as "B", such inhibition that burrs were formed all around the perimeter was determined as "C", and "A" and "B" were determined as acceptable.

Epoxy resin compositions were prepared by mixing as mentioned above according to the blending ratios in the tables, and were subjected to viscosity measurement and dielectric measurement as mentioned above. Furthermore, resin cured plates were manufactured from these epoxy resin compositions by the method mentioned above, and subjected to glass transition temperature Tg measurement and coloration evaluation. Still further, using epoxy resin compositions, fiber-reinforced composite materials were prepared by the method mentioned above.

(Example 1)

As shown in Table 1, an epoxy resin composition was prepared by mixing a base resin pack made of 45 parts by mass of an alicyclic epoxy resin "CELLOXIDE" (registered trademark) 2021P', 15 parts by mass of an aliphatic epoxy resin '"HELOXY"™ Modifier 107', and 40 parts by mass of a bisphenol A type epoxy resin "'Epotohto" (registered trademark) YD-128', and a curing agent pack obtained by mutually dissolving 12 parts by mass of tetraphenylphosphonium bromide with 107 parts by mass of an acid anhydride "HN-5500" by heating at a temperature of 80°C. The epoxy resin composition of Example 1, when kept at a temperature of 40°C, exhibited a sharp viscosity increase until after 10 minutes following the mixing preparation and, until after 20 minutes following that, viscosity increase was restrained and a low viscosity state was maintained. Further, it was found that the epoxy resin composition of Example 1 was also effective in shortening the forming time in the formation of the fiber-reinforced composite material since the mold releasable time represented by t90 at a temperature of 130°C was short. Furthermore, as for a cured product of this epoxy resin composition, Tg exceeded the molding temperature (130°C), and no coloration occurred. A fiber-reinforced composite material prepared by using this epoxy resin composition allowed a formed product to be easily released from the mold die without being deformed at the time of extracting the formed product from the mold die and produced fewer burrs on the formed product. Results are shown in Table 1.

(Examples 2 and 3)

The same procedures were carried out in the same manner as in Example 1, except that the aliphatic epoxy resin '"HELOXY"™ Modifier 107', the bisphenol A type epoxy resin "Epotohto" (registered trademark) YD-128' and the acid anhydride "HN-5500" were employed respectively in the amounts shown in Table 1. The epoxy resin compositions of these examples were excellent in viscosity increase after mixing preparation and viscosity stability after that at a temperature of 40°C, and had short mold releasable time. Furthermore, as for cured products of these epoxy resin compositions, Tg exceeded the molding temperature (130°C), and no coloration occurred. Therefore, fiber-reinforced composite materials prepared by using these epoxy resin compositions allowed molded products to be easily released from the mold dies without being deformed at the time of extracting the molded products from the mold dies and produced fewer burrs. Results are shown in Table 1.

(Examples 4 and 5)

The same procedures were carried out in the same manner as in Example 1, except that the alicyclic epoxy resin "CELLOXIDE" (registered trademark) 2021P', an aliphatic epoxy resin '"HELOXY"™ Modifier 68', the bisphenol A type epoxy resin "Epotohto" (registered trademark) YD-128', the acid anhydride "HN-5500" and tetraphenylphosphonium chloride were employed respectively in the amounts shown in Table 1. The epoxy resin compositions of these examples were excellent in viscosity increase after mixing preparation and viscosity stability at a temperature of 40°C, and had short mold releasable time. Furthermore, as for cured products of these epoxy resin compositions, Tg exceeded the molding temperature (130°C) while it is near, and no coloration occurred. Therefore, fiber-reinforced composite materials prepared by using these epoxy resin compositions allowed molded products to be easily released from the mold dies without being deformed at the time of extracting the molded products from the mold dies (Example 5 required some time to be released from the mold dies) and produced fewer burrs. Results are shown in Table 1.

(Example 6)

The same procedures were carried out in the same manner as in Example 1, except that the alicyclic epoxy resin "CELLOXIDE" (registered trademark) 3000', the aliphatic epoxy resin '"HELOXY"™ Modifier 107', the bisphenol A type epoxy resin "Epotohto" (registered trademark) YD-128', the acid anhydride "HN-5500" and ethyltriphenylphosphonium bromide were employed respectively in the amounts shown in Table 1. The epoxy resin composition of Example 6 was excellent in viscosity increase after mixing preparation and viscosity stability at a temperature of 40°C, and had short mold releasable time. Furthermore, as for a cured product of the epoxy resin composition, Tg exceeded the molding temperature (130°C) while it is near, and no coloration occurred. Therefore, a fiber-reinforced composite material prepared by using the epoxy resin composition allowed a molded product to be easily released from the mold dies without being deformed at the time of extracting the molded product from the mold dies while it required some time and produced fewer burrs Results are shown in Table 1.

(Examples 7 to 9)

The same procedures were carried out in the same manner as in Example 4, except that the alicyclic epoxy resin "CELLOXIDE" (registered trademark) 2021P', the aliphatic epoxy resin '"HELOXY"™ Modifier 68', the bisphenol A type epoxy resin "Epotohto" (registered trademark) YD-128', the acid anhydride "HN-5500" and tetraphenylphosphonium chloride were employed respectively in the amounts shown in Table 2. The epoxy resin compositions of these examples were excellent in viscosity increase after mixing preparation and viscosity stability at a temperature of 40°C, and had short mold releasable time. Furthermore, as for cured products of these epoxy resin compositions, Tg exceeded the molding temperature (130°C), and no coloration occurred. Therefore, fiber-reinforced composite materials prepared by using these epoxy resin compositions allowed molded products to be easily released from the mold dies without being deformed at the time of extracting the molded products from the mold dies and produced fewer burrs. Results are shown in Table 2.

(Example 10)

An epoxy resin composition was prepared by mixing a base resin pack made of 45 parts by mass of the alicyclic epoxy resin "CELLOXIDE" (registered trademark) 2021P', 30 parts by mass of an aliphatic epoxy resin '"HELOXY"™ Modifier 67', and 25 parts by mass of the bisphenol A type epoxy resin "'Epotohto" (registered trademark) YD-128', and a curing agent pack obtained by mutually dissolving 10 parts by mass of tetramethylammonium bromide with 123 parts by mass of an acid anhydride '"KAYAHARD" (registered trademark) MCD' by heating at a temperature of 80°C. Even

when the epoxy resin composition of Example 10 was kept at a temperature of 40°C, the viscosity increase rate remained low and a low viscosity state was maintained. Furthermore, it was found that because the mold releasable time represented by t90 at a temperature of 130°C was short, this composition was effective in shortening the forming time in the formation of the fiber-reinforced composite material. Furthermore, as for a cured product of this epoxy resin composition, Tg exceeded the molding temperature (130°C), and no coloration occurred.
Therefore, a fiber-reinforced composite material prepared by using this epoxy resin composition allowed a molded product to be easily released from the mold die without being deformed at the time of extracting the molded product from the mold die. Results are shown in Table 2.

(Example 11)

An epoxy resin composition was prepared by mixing a base resin pack made of 45 parts by mass of the alicyclic epoxy resin "CELLOXIDE" (registered trademark) 2021P’, 30 parts by mass of the aliphatic epoxy resin ’"HELOXY"™ Modifier 67’, and 25 parts by mass of the bisphenol A type epoxy resin "’Epotohto" (registered trademark) YD-128’, and a curing agent pack obtained by mutually dissolving 11 parts by mass of 1-butyl-3-methylimidazolium chloride with 123 parts by mass of the acid anhydride "’KAYAHARD" (registered trademark) MCD’ by heating at a temperature of 80°C. Even when the epoxy resin composition of Example 11 was kept at a temperature of a temperature of 40°C, the viscosity increase rate remained low and a low viscosity state was maintained. Further, it was found that the epoxy resin composition of Example 11 was also effective in shortening the forming time in the formation of the fiber-reinforced composite material since the mold releasable time represented by t90 at a temperature of 130°C was short. Furthermore, as for a cured product of this epoxy resin composition, Tg exceeded the molding temperature (130°C), and no coloration occurred. Therefore, a fiber-reinforced composite material prepared by using this epoxy resin composition allowed a molded product to be easily released from the mold die without being deformed at the time of extracting the molded product from the mold die. Results are shown in Table 2.

(Example 12)

The same procedures were carried out in the same manner as in Example 4, except that the bisphenol type epoxy resin was changed to a bisphenol F type epoxy resin ’"Epotohto" (registered trademark) YDF-170’ and the amount of the acid anhydride "HN-5500" was set to the amount shown in Table 2. The epoxy resin composition of Example 12 was excellent in viscosity increase after mixing preparation and viscosity stability at a temperature of 40°C, and had short mold releasable time. Furthermore, as for a cured product of the epoxy resin composition, Tg exceeded the molding temperature (130°C) while it is near, and no coloration occurred. Therefore, a fiber-reinforced composite material prepared by using the epoxy resin composition allowed a molded product to be easily released from the mold dies without being deformed at the time of extracting the molded product from the mold dies and produced fewer burrs. Results are shown in Table 2.

(Example 13)

The same procedures were carried out in the same manner as in Example 1, except that 45 parts by mass of an alicyclic epoxy resin "CELLOXIDE (registered trademark) 8000", the acid anhydride "HN-5500" and ethyltriphenylphosphonium bromide were employed respectively in the amounts shown in Table 3. The epoxy resin composition of Example 13 was excellent in viscosity stability after mixing preparation and viscosity stability after that at a temperature of 40°C, and had short mold releasable time. Furthermore, as for a cured product of the epoxy resin composition, Tg exceeded the molding temperature (130°C), and no coloration occurred.
Therefore, a fiber-reinforced composite material prepared by using the epoxy resin composition allowed a molded product to be easily released from the mold dies without being deformed at the time of extracting the molded product from the mold dies and produced fewer burrs. Results are shown in Table 3.

(Examples 14 to 17)

The same procedures were carried out in the same manner as in Example 1, except that the alicyclic epoxy resin "CELLOXIDE" (registered trademark) 8000’, the bisphenol A type epoxy resin "Epotohto" (registered trademark) YD-128’, the acid anhydride "HN-5500" and tetraphenylphosphonium bromide were employed respectively in the amounts shown in Table 3. The epoxy resin compositions of these examples were excellent in viscosity increase after mixing preparation and viscosity stability at a temperature of 40°C, and had short mold releasable time. Furthermore, as for cured products of these epoxy resin compositions, Tg exceeded the molding temperature (130°C), and no coloration occurred. Therefore, fiber-reinforced composite materials prepared by using these epoxy resin compositions allowed

molded products to be easily released from the mold dies without being deformed at the time of extracting the molded products from the mold dies and produced fewer burrs. Results are shown in Table 3.

(Comparative Example 1)

The same procedures were carried out in the same manner as in Example 1, except that the aliphatic epoxy resin of the component [B] was not contained, and the amount of the bisphenol A type epoxy resin "Epotohto" (registered trademark) YD-128' was changed to 55 parts by weight and the amount of the acid anhydride "HN-5500" was changed to 104 parts by weight. The epoxy resin composition of Comparative Example 1 was excellent in viscosity increase after mixing preparation and viscosity stability at a temperature of 40°C. However, since the component [B] was not contained, the viscosity was high as compared with that of the examples of the present invention and impregnation of the resin to a reinforcing fiber was poor. Results are shown in Table 4.

(Comparative Example 2)

The same procedures were carried out in the same manner as in Example 5, except that the amount of the alicyclic epoxy resin "CELLOXIDE" (registered trademark) 2021P' was changed to 50 parts by mass, the component [C] bisphenol type epoxy resin was not contained, and the amount of the acid anhydride "HN-5500" was changed to 114 parts by mass. The epoxy resin composition of Comparative Example 2 was excellent in viscosity increase after mixing preparation and viscosity stability at a temperature of 40°C. However, since the component [A] was too much and the component [C] was not contained, the viscosity was too low as compared with that of the examples of the present invention and air was taken in at the time of injection into the reinforcing-fiber base when forming a fiber-reinforced composite material so that impregnation became non-uniform and a non-impregnated region was generated, and as a result, impregnation was poor. Results are shown in Table 4.

(Comparative Example 3)

The same procedures were carried out in the same manner as in Example 4, except that the amount of the aliphatic epoxy resin '"HELOXY"™ Modifier 68' was changed to 55 parts by mass, the amount of the bisphenol A type epoxy resin "Epotohto" (registered trademark) YD-128' was changed to 20 parts by mass, and the amount of the acid anhydride "HN-5500" was changed to 116 parts by mass. The epoxy resin composition of Comparative Example 3 was excellent in viscosity increase after mixing preparation and viscosity stability at a temperature of 40°C. However, since the component [B] was too much, the Tg of the cured product was below the molding temperature (130°C) as compared with that of the examples of the present invention, so that the fiber-reinforced composite material was deformed when released from the mold dies. Results are shown in Table 4.

(Comparative Example 4)

The same procedures were carried out in the same manner as in Example 1, except that a base resin pack made of 25 parts by mass of the alicyclic epoxy resin "CELLOXIDE" (registered trademark) 2021P', 37 parts by mass of the aliphatic epoxy resin "HELOXY"™ Modifier 107', and 38 parts by mass of the bisphenol A type epoxy resin "Epotohto" (registered trademark) YD-128', and a curing agent pack made of 21 parts by mass of metaxylene diamine without containing the component [D] and the component [E] were employed. In the epoxy resin composition of Comparative Example 4, since neither the component [D] nor the component [E] was contained, the viscosity of the epoxy resin composition was high, the viscosity increase rate was high, and the stability of viscosity was inferior. Therefore, in the forming of the fiber-reinforced composite material through the use of this epoxy resin composition, impregnation to the reinforcing fiber was inferior. Results are shown in Table 4.

(Comparative Example 5)

The same procedures were carried out in the same manner as in Example 1, except that a base resin pack made of 25 parts by mass of the alicyclic epoxy resin "CELLOXIDE" (registered trademark) 3000', 37 parts by mass of the aliphatic epoxy resin "HELOXY"™ Modifier 68', and 38 parts by mass of the bisphenol A type epoxy resin "Epotohto" (registered trademark) YD-128', and a curing agent pack made of 125 parts by mass of the acid anhydride "HN-5500", and 10 parts by mass of 1,2-dimethylimidazole in place of the component [E] were employed. In the epoxy resin composition of Comparative Example 5, since the component [E] was not contained, the viscosity increase rate at a temperature of 40°C was high and the stability of viscosity was inferior as compared with that of the examples of the present invention. Therefore, in the forming of a fiber-reinforced composite material through the use of the epoxy resin composition, impregnation to the reinforcing fiber was inferior and the cured product was colored. Results are shown in Table 4.

(Comparative Example 6)

The same procedures were carried out in the same manner as in Example 1, except that a base resin pack made of 45 parts by mass of the alicyclic epoxy resin "CELLOXIDE" (registered trademark) 2021P’, 30 parts by mass of the aliphatic epoxy resin ’"HELOXY"™ Modifier 68’, and 25 parts by mass of the bisphenol A type epoxy resin "Epotohto" (registered trademark) YD-128’, and a curing agent pack made of 108 parts by mass of the acid anhydride "HN-5500", and 10 parts by mass of tri-p-tolylphosphine in place of the component [E] were employed. In the epoxy resin composition of Comparative Example 6, since the component [E] was not contained, the curing time was longer as compared with that in the examples of the present invention, and viscosity increase after mixing preparation was not exhibited. In addition, the cured product was colored. The molding of a fiber-reinforced composite material through the use of this epoxy resin composition was accompanied by many burrs formed on the formed product, and quality of the formed product was deteriorated. Results are shown in Table 4.

(Comparative Example 7)

The same procedures were carried out in the same manner as in Example 1, except that the aliphatic epoxy resin of the component [A] was not contained, and the amount of the aliphatic epoxy resin "HELOXY"™ Modifier 107’ was changed to 50 parts by mass, the amount of the bisphenol A type epoxy resin "Epotohto" (registered trademark) YD-128’ was changed to 50 parts by mass, and the amount of the acid anhydride "HN-5500" was changed to 97 parts by mass. The epoxy resin composition of Comparative Example 7 was excellent in viscosity increase after mixing preparation and viscosity stability at a temperature of 40°C. However, since the component [A] was not contained, the Tg of the cured product was below the molding temperature (130°C) as compared with that of the examples of the present invention, so that the fiber-reinforced composite material was deformed when released from the mold dies. Results are shown in Table 5.

(Comparative Examples 8 and 9)

The same procedures were carried out in the same manner as in Example 1, except that the alicyclic epoxy resin "CELLOXIDE" (registered trademark) 8000’, the bisphenol A type epoxy resin "Epotohto" (registered trademark) YD-128’, the acid anhydride "HN-5500" and tetraphenylphosphonium bromide were employed respectively in the amounts shown in Table 5. The epoxy resin composition of Comparative Example 8 containing a small amount of alicyclic epoxy resin (3,4,3’,4’-diepoxybicyclohexyl) was excellent in viscosity increase after mixing preparation and viscosity stability at a temperature of 40°C. However, since the viscosity was high as compared with that of the examples of the present invention and impregnation of the resin to a reinforcing fiber was poor. In addition, the epoxy resin composition of Comparative Example 9 containing a large amount of alicyclic epoxy resin (3,4,3’,4’-diepoxybicyclohexyl) was excellent in viscosity increase after mixing preparation and viscosity stability at a temperature of 40°C. However, since the viscosity was too low as compared with that of the examples of the present invention and air was taken in at the time of injection into the reinforcing-fiber base when forming a fiber-reinforced composite material so that impregnation became non-uniform and a non-impregnated region was generated, and as a result, impregnation was poor. Results are shown in Table 5.

As described above, the epoxy epoxy resin composition of the present invention was suitable for the formation of a fiber-reinforced composite material and, using the RTM process or the like, can provide a fiber-reinforced composite material excellent in external appearance and surface quality with high productivity in a short time. Furthermore, the epoxy epoxy resin composition of the present invention is also excellent in the formation of fiber-reinforced composite material of large configurations, and is particularly suitable for applications to motor vehicle members.

[Table 1]

| | | | Example 1 | Example 2 | Example 3 | Example 4 | Example 5 | Example 6 |
|---|---|---|---|---|---|---|---|---|
| Epoxy resin composition | Component [A] Alicyclic epoxy resin | CELLOXIDE 2021P | 45 | 45 | 45 | 25 | 25 | |
| | | CELLOXIDE 3000 | | | | | | 5 |
| | | CELLOXIDE 8000 | | | | | | |
| | Component [B] Aliphatic epoxy resin | HELOXY Modifier 67 | | | | | | |
| | | HELOXY Modifier 68 | | | | 37 | 50 | |
| | | HELOXY Modifier 107 | 15 | 30 | 50 | | | 50 |
| | Component [C] Bisphenol type epoxy resin | YD-128 | 40 | 25 | 5 | 38 | 25 | 45 |
| | | YDF-170 | | | | | | |
| | Component [D] | HN-5500 | 107 | 108 | 113 | 110 | 114 | 102 |
| | Acid anhydride | KAYAHARD MCD | | | | | | |
| | Component [E] Quaternary ammonium salt, quaternary phosphonium salt, imidazolium salt | Tetramethylammonium bromide | | | | | | |
| | | Tetraphenylphosphonium bromide | 12 | 12 | 12 | | | |
| | | Ethyltriphenylphosphonium bromide | | | | | | 11 |
| | | Tetraphenylphosphonium chloride | | | | 11 | 11 | |
| | | 1-Butyl-3-methylimidazolium chloride | | | | | | |

| | | | | | | | |
|---|---|---|---|---|---|---|---|
| Other substances | Metaxylene diamine | | | | | | |
| | 1,2-Dimethylimidazole | | | | | | |
| | Tri-p-tolylphosphine | | | | | | |
| | H/E Ratio | 1.0 | 1.0 | 1.0 | 1.0 | 1.0 | 1.0 |
| Uncured resin characteristics | Initial (1 minute after mixing) viscosity [mPa·s] of composition at 40°C | 127 | 103 | 76 | 96 | 78 | 81 |
| | Viscosity [mPa·s] at 10 minutes after mixing composition at 40°C | 234 | 196 | 151 | 153 | 132 | 188 |
| | (Ratio to viscosity at 1 minute after mixing) | 1.8 | 1.9 | 2.0 | 1.6 | 1.7 | 2.3 |
| | Viscosity [mPa·s] at 20 minutes after mixing composition at 40°C | 294 | 235 | 166 | 203 | 159 | 241 |
| | (Ratio to viscosity at 10 minutes after mixing) | 1.3 | 1.2 | 1.1 | 1.3 | 1.2 | 1.3 |
| | t90 [min] at 130°C | 1.9 | 2.1 | 2.3 | 2.8 | 3.0 | 2.2 |
| Resin cured product characteristics | Glass transition temperature [°C] of cured product | 174 | 164 | 149 | 137 | 131 | 131 |
| | Coloring of cured product | None | None | None | None | None | None |
| Moldability of fiber-reinforced composite material | Impregnation to reinforcing fiber | A | A | A | A | A | A |
| | Ease of mold release operation | A | A | A | A | B | B |
| | Suppression of burr generation | A | A | A | A | A | A |

[Table 2]

| | | | Example 7 | Example 8 | Example 9 | Example 10 | Example 11 | Example 12 |
|---|---|---|---|---|---|---|---|---|
| Epoxy resin composition | Component [A] Alicyclic epoxy resin | CELLOXIDE 2021P | 25 | 25 | 25 | 45 | 45 | 25 |
| | | CELLOXIDE 3000 | | | | | | |
| | | CELLOXIDE 8000 | | | | | | |
| | Component [B] Aliphatic epoxy resin | HELOXY Modifier 67 | | | | 30 | 30 | |
| | | HELOXY Modifier 68 | 37 | 37 | 37 | | | 37 |
| | | HELOXY Modifier 107 | | | | | | |
| | Component [C] Bisphenol type epoxy resin | YD-128 | 38 | 38 | 38 | 25 | 25 | |
| | | YDF-170 | | | | | | 38 |
| | Component [D] Acid anhydride | HN-5500 | 110 | 110 | 110 | | | 114 |
| | | KAYAHARD MCD | | | | 123 | 123 | |
| | Component [E] Quaternary ammonium salt, quaternary phosphonium salt, imidazolium salt | Tetramethylammonium bromide | | | | 10 | | |
| | | Tetraphenylphosphonium bromide | | | | | | |
| | | Ethyltriphenylphosphonium bromide | | | | | | |
| | | Tetraphenylphosphonium chloride | 25 | 5 | 3 | | | 11 |
| | | 1-Butyl-3-methylimidazolium chloride | | | | | 11 | |

| | | | | | | | |
|---|---|---|---|---|---|---|---|
| Other substances | | Metaxylene diamine | | | | | | |
| | | 1,2-Dimethylimidazole | | | | | | |
| | | Tri-p-tolylphosphine | | | | | | |
| | | H/E Ratio | 1.0 | 1.0 | 1.0 | 1.0 | 1.0 | 1.0 |
| Uncured resin characteristics | | Initial (1 minute after mixing) viscosity [mPa·s] of composition at 40°C | 148 | 91 | 87 | 97 | 101 | 87 |
| | | Viscosity [mPa·s] at 10 minutes after mixing composition at 40°C | 370 | 146 | 131 | 107 | 111 | 148 |
| | | (Ratio to viscosity at 1 minute after mixing) | 2.5 | 1.6 | 1.5 | 1.1 | 1.1 | 1.7 |
| | | Viscosity [mPa·s] at 20 minutes after mixing composition at 40°C | 740 | 189 | 144 | 139 | 122 | 207 |
| | | (Ratio to viscosity at 10 minutes after mixing) | 2.0 | 1.3 | 1.1 | 1.3 | 1.2 | 1.4 |
| | | t90 [min] at 130°C | 1.4 | 3.5 | 3.9 | 2.5 | 3.0 | 3.3 |
| Resin cured product characteristics | | Glass transition temperature [°C] of cured product | 131 | 143 | 146 | 156 | 157 | 131 |
| | | Coloring of cured product | None | None | None | None | None | None |
| Moldability of fiber-reinforced composite material | | Impregnation to reinforcing | B | A | A | A | A | A |
| | | Ease of mold release operation | B | A | A | A | A | B |
| | | Suppression of burr generation | A | A | B | B | B | A |

[Table 3]

| | | | Example 13 | Example 14 | Example 15 | Example 16 | Example 17 |
|---|---|---|---|---|---|---|---|
| Epoxy resin composition | Component [A] Alicyclic epoxy resin | CELLOXIDE 2021P | | | | | |
| | | CELLOXIDE 3000 | | | | | |
| | | CELLOXIDE 8000 | 45 | 15 | 20 | 45 | 70 |
| | Component [B] Aliphatic epoxy resin | HELOXY Modifier 67 | | | | | |
| | | HELOXY Modifier 68 | | | | | |
| | | HELOXY Modifier 107 | 30 | | | | |
| | Component [C] Bisphenol type epoxy resin | YD-128 | 25 | 85 | 80 | 55 | 30 |
| | | YDF-170 | | | | | |
| | Component [D] Acid anhydride | HN-5500 | 120 | 94 | 98 | 116 | 134 |
| | | KAYAHARD MCD | | | | | |
| | Component [E] Quaternary ammonium salt, quaternary phosphonium salt, imidazolium salt | Tetramethylammonium bromide | | | | | |
| | | Tetraphenylphosphonium bromide | | | | | |
| | | Ethyltriphenylphosphonium bromide | 12 | 10 | 11 | 12 | 14 |
| | | Tetraphenylphosphonium chloride | | | | | |
| | | 1-Butyl-3-methylimidazolium chloride | | | | | |

| | | | | | | | |
|---|---|---|---|---|---|---|---|
| | Other substances | Metaxylene diamine | | | | | |
| | | 1,2-Dimethylimidazole | | | | | |
| | | Tri-p-tolylphosphine | | | | | |
| | | H/E Ratio | 1.0 | 1.0 | 1.0 | 1.0 | 1.0 |
| Uncured resin characteristics | | Initial (1 minute after mixing) viscosity [mPa·s] of composition at 40°C | 71 | 146 | 129 | 90 | 67 |
| | | Viscosity [mPa·s] at 10 minutes after mixing composition at 40°C | 114 | 322 | 270 | 163 | 102 |
| | | (Ratio to viscosity at 1 minute after mixing) | 1.6 | 2.2 | 2.1 | 1.8 | 1.5 |
| | | Viscosity [mPa·s] at 20 minutes after mixing composition at 40°C | 126 | 358 | 323 | 184 | 118 |
| | | (Ratio to viscosity at 10 minutes after mixing) | 1.1 | 1.1 | 1.2 | 1.1 | 1.2 |
| | | t90 [min] at 130°C | 2.5 | 1.9 | 2.0 | 2.2 | 2.2 |
| Resin cured product characteristics | | Glass transition temperature [°C] of cured product | 172 | 152 | 158 | 162 | 180 |
| | | Coloring of cured product | None | None | None | None | None |
| Moldability of fiber-reinforced composite material | | Impregnation to reinforcing fiber | A | B | A | A | B |
| | | Ease of mold release operation | A | A | A | A | A |
| | | Suppression of burr generation | A | A | A | A | B |

[Table 4]

| | | | Comparative Example 1 | Comparative Example 2 | Comparative Example 3 | Comparative Example 4 | Comparative Example 5 | Comparative Example 6 |
|---|---|---|---|---|---|---|---|---|
| Epoxy resin composition | Component [A] Alicyclic epoxy resin | CELLOXIDE 2021P | 45 | 50 | 25 | 25 | | 45 |
| | | CELLOXIDE 3000 | | | | | 25 | |
| | | CELLOXIDE 8000 | | | | | | |
| | Component [B] Aliphatic epoxy resin | HELOXY Modifier 67 | | | | | | |
| | | HELOXY Modifier 68 | | | 55 | | 37 | 30 |
| | | HELOXY Modifier 107 | | 50 | | 37 | | |
| | Component [C] Bisphenol type epoxy resin | YD-128 | 55 | | 20 | 38 | 38 | 25 |
| | | YDF-170 | | | | | | |
| | Component [D] Acid anhydride | HN-5500 | 104 | 114 | 116 | | 125 | 108 |
| | | KAYAHARD MCD | | | | | | |
| | Component [E] Quaternary ammonium salt, quaternary phosphonium salt, imidazolium salt | Tetramethylammonium bromide | | | | | | |
| | | Tetraphenylphosphonium bromide | 12 | 12 | | | | |
| | | Ethyltriphenylphosphonium bromide | | | | | | |
| | | Tetraphenylphosphonium chloride | | | 11 | | | |
| | | 1-Butyl-3-methylimidazolium chloride | | | | | | |

| | | | | | | | |
|---|---|---|---|---|---|---|---|
| Other substances | Metaxylene diamine | | | | 21 | | |
| | 1,2-Dimethylimidazole | | | | | 10 | |
| | Tri-p-tolylphosphine | | | | | | 10 |
| | H/E Ratio | 1.0 | 1.0 | 1.0 | 1.0 | 1.0 | 1.0 |
| Uncured resin characteristics | Initial (1 minute after mixing) viscosity [mPa·s] of composition at 40°C | 163 | 63 | 73 | 264 | 72 | 99 |
| | Viscosity [mPa·s] at 10 minutes after mixing composition at 40°C | 277 | 131 | 131 | 924 | 214 | 108 |
| | (Ratio to viscosity at 1 minute after mixing) | 1.7 | 2.1 | 1.8 | 3.5 | 3.0 | 1.0 |
| | Viscosity [mPa·s] at 20 minutes after mixing composition at 40°C | 416 | 145 | 158 | 2680 | 692 | 152 |
| | (Ratio to viscosity at 10 minutes after mixing) | 1.5 | 1.1 | 1.2 | 2.9 | 3.2 | 1.4 |
| | t90 [min] at 130°C | 1.7 | 3.0 | 3.2 | 4.3 | 2.1 | 12 |
| Resin cured product characteristics | Glass transition temperature [°C] of cured product | 185 | 143 | 127 | 135 | 142 | 158 |
| | Coloring of cured product | None | None | None | Colored | Colored | Colored |
| Moldability of fiber-reinforced composite material | Impregnation to reinforcing fiber | C | C | A | C | C | A |
| | Ease of mold release operation | A | A | C | A | A | A |
| | Suppression of burr generation | A | A | A | A | A | C |

[Table 5]

| | | | Comparative Example 7 | Comparative Example 8 | Comparative Example 9 |
|---|---|---|---|---|---|
| Epoxy resin composition | Component [A] Alicyclic epoxy resin | CELLOXIDE 2021P | | | |
| | | CELLOXIDE 3000 | | | |
| | | CELLOXIDE 8000 | | 10 | 80 |
| | Component [B] Aliphatic epoxy resin | HELOXY Modifier 67 | | | |
| | | HELOXY Modifier 68 | | | |
| | | HELOXY Modifier 107 | 50 | | |
| | Component [C] Bisphenol type epoxy resin | YD-128 | 50 | 90 | 20 |
| | | YDF-170 | | | |
| | Component [D] Acid anhydride | HN-5500 | 97 | 91 | 141 |
| | | KAYAHARD MCD | | | |
| | Component [E] Quaternary ammonium salt, quaternary phosphonium salt, imidazolium salt | Tetramethylammonium bromide | | | |
| | | Tetraphenylphosphonium bromide | 12 | | |
| | | Ethyltriphenylphosphonium bromide | | 10 | 15 |
| | | Tetraphenylphosphonium chloride | | | |
| | | 1-Butyl-3-methylimidazolium chloride | | | |
| | Other substances | Metaxylene diamine | | | |
| | | 1,2-Dimethylimidazole | | | |
| | | Tri-p-tolylphosphine | | | |

| | | | | |
|---|---|---|---|---|
| | H/E Ratio | 1.0 | 1.0 | 1.0 |
| Uncured resin characteristics | Initial (1 minute after mixing) viscosity [mPa·s] of composition at 40°C | 127 | 168 | 56 |
| | Viscosity [mPa·s] at 10 minutes after mixing composition at 40°C | 263 | 388 | 78 |
| | (Ratio to viscosity at 1 minute after mixing) | 2.1 | 2.3 | 1.4 |
| | Viscosity [mPa·s] at 20 minutes after mixing composition at 40°C | 341 | 465 | 86 |
| | (Ratio to viscosity at 10 minutes after mixing) | 1.3 | 1.2 | 1.1 |
| | t90 [min] at 130°C | 2.5 | 1.9 | 2.2 |
| Resin cured product characteristics | Glass transition temperature [°C] of cured product | 119 | 145 | 189 |
| | Coloring of cured product | None | None | None |
| Moldability of fiber-reinforced composite material | Impregnation to reinforcing fiber | B | C | C |
| | Ease of mold release operation | C | A | A |
| | Suppression of burr generation | A | A | B |

INDUSTRIAL APPLICABILITY

The two-pack epoxy resin composition for a fiber-reinforced composite material of the present invention is excellent in the ease of operation at the time of preparation of epoxy resin and excellent in viscosity stability at a low temperature (e.g., 40°C) of the epoxy resin composition after mixing preparation, and cures in a short time at the time of formation, and gives high-quality fiber-reinforced composite materials. Therefore, it becomes possible to provide high-quality fiber-reinforced composite materials with high productivity by using the RTM process or the like. This promotes application of the fiber-reinforced composite material particularly to motor vehicle usage so that fuel economy improvement by further weight reduction of motor vehicles and contribution to reduction of global warming gas emissions can be expected.

## Claims

**1.** A two-pack epoxy resin composition for a fiber-reinforced composite material comprises the following components [A] to [E], and the content of the component [A] is 5 to 45% by mass, the content of the component [B] is 5 to 50% by mass, and the content of the component [C] is 5 to 50% by mass, relative to 100% by mass of the total of the components [A], [B] and [C].

- component [A]: an alicyclic epoxy resin
- component [B]: an aliphatic epoxy resin
- component [C]: a bisphenol type epoxy resin
- component [D]: an acid anhydride
- component [E]: a compound selected from the group consisting of quaternary ammonium salts, quaternary phosphonium salts, and imidazolium salts.

**2.** The two-pack epoxy resin composition for a fiber-reinforced composite material according to claim 1, wherein the component [A] is 3,4,3',4'-diepoxybicyclohexyl.

**3.** A two-pack epoxy resin composition for a fiber-reinforced composite material comprises the following components [a], [C], [D] and [E], and the content of the component [a] is 15 to 70% by mass relative to 100% by mass of the total of the components [a] and [C].

- component [a]: 3,4,3',4'-diepoxybicyclohexyl
- component [C]: a bisphenol type epoxy resin
- component [D]: an acid anhydride
- component [E]: a compound selected from the group consisting of quaternary ammonium salts, quaternary phosphonium salts, and imidazolium salts.

**4.** The two-pack epoxy resin composition for a fiber-reinforced composite material according to claim 3, further comprising the following component [B].

- component [B]: an aliphatic epoxy resin

**5.** The two-pack epoxy resin composition for a fiber-reinforced composite material according to any of claims 1, 2 and 4, wherein the component [B] is an aliphatic epoxy resin having a molecular weight of 300 or less.

**6.** The two-pack epoxy resin composition for a fiber-reinforced composite material according to any of claims 1 to 5, wherein the component [E] is a quaternary phosphonium halide.

**7.** The two-pack epoxy resin composition for a fiber-reinforced composite material according to any of claims 1 to 6, wherein the component [E] is a quaternary phosphonium bromide.

**8.** The two-pack epoxy resin composition for a fiber-reinforced composite material according to any of claims 1 to 7, wherein the component [E] is tetraphenylphosphonium halide.

**9.** The two-pack epoxy resin composition for a fiber-reinforced composite material according to any of claims 1 to 8, wherein the content of the component [E] is 3 to 25 parts by mass relative to 100 parts by mass of the total of the

components [A], [B] and [C], or the content of the component [E] is 3 to 25 parts by mass relative to 100 parts by mass of the total of the components [a] and [C].

**10.** The two-pack epoxy resin composition for a fiber-reinforced composite material according to any of claims 1 to 9, wherein the component [C] is a bisphenol A type epoxy resin.

**11.** The two-pack epoxy resin composition for a fiber-reinforced composite material according to any of claims 1 to 10, further comprising the following component [F].

- component [F]: an reinforcing fiber

**12.** The two-pack epoxy resin composition for a fiber-reinforced composite material according to claim 11, wherein the component [F] is a carbon fiber.

**13.** The two-pack epoxy resin composition for a fiber-reinforced composite material according to any of claims 1 to 12, wherein the component [D] is an acid anhydride having an alicyclic structure.

**14.** A fiber-reinforced composite material obtained by curing the two-pack epoxy resin composition for a fiber-reinforced composite material as defined in any of claims 9 to 13.

**INTERNATIONAL SEARCH REPORT**

International application No. PCT/JP2017/016267

A. CLASSIFICATION OF SUBJECT MATTER
*C08G59/20*(2006.01)i, *C08G59/40*(2006.01)i, *C08J5/24*(2006.01)i, *C08K7/02*(2006.01)i, *C08L63/00*(2006.01)i

According to International Patent Classification (IPC) or to both national classification and IPC

B. FIELDS SEARCHED

Minimum documentation searched (classification system followed by classification symbols)
C08G59/20, C08G59/40, C08J5/24, C08K7/02, C08L63/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2015-193830 A (Sanyo Chemical Industries, Ltd.), 05 November 2015 (05.11.2015), claims; paragraphs [0005], [0036], [0045] to [0059], [0068]; examples (Family: none) | 1,5,9-14<br>1,5-14 |
| Y | JP 46-17588 B1 (Shell International Research Maatschappij N.V.), 15 May 1971 (15.05.1971), columns 1, 2, 4 (Family: none) | 1,5-14 |
| Y | WO 2011/078205 A1 (Nippon Kayaku Co., Ltd.), 30 June 2011 (30.06.2011), paragraph [0055] & TW 201132666 A | 6-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 July 2017 (18.07.17) | 25 July 2017 (25.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | <br><br>Telephone No. |

Form PCT/ISA/210 (second sheet) (January 2015)

**INTERNATIONAL SEARCH REPORT**

International application No. PCT/JP2017/016267

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2010/119903 A1 (JNC Corp.), 21 October 2010 (21.10.2010), paragraph [0021] & US 2012/0052296 A1 paragraph [0057] & EP 2420529 A1 & CN 102395622 A & KR 10-2012-0022906 A | 6-8 |
| Y | WO 2014/103759 A1 (Mitsubishi Gas Chemical Co., Inc.), 03 July 2014 (03.07.2014), claims; paragraphs [0014] to [0025], [0032] to [0046]; examples & US 2015/0337075 A1 claims; paragraphs [0013] to [0024], [0031] to [0044]; examples & EP 2940053 A1 & CN 104903380 A & KR 10-2015-0103013 A | 1,5-11,13,14 |
| Y | JP 2013-1711 A (The Yokohama Rubber Co., Ltd.), 07 January 2013 (07.01.2013), claims; paragraphs [0023], [0024] (Family: none) | 1,5-11,13,14 |
| Y | JP 2004-51960 A (Nitto Denko Corp.), 19 February 2004 (19.02.2004), claims; paragraphs [0016] to [0030], [0056], [0075]; examples & US 2005/0129877 A1 claims; paragraphs [0015] to [0031], [0058], [0077]; examples & WO 2003/099912 A1 & CN 1656156 A & KR 10-2005-0004876 A | 1,5-11,13,14 |
| Y | WO 2015/046030 A1 (Toray Industries, Inc.), 02 April 2015 (02.04.2015), paragraph [0047] & US 2016/0237273 A1 paragraph [0058] & EP 3053941 A1 & CN 105593261 A & KR 10-2016-0065870 A | 13 |
| P,A | WO 2016/158757 A1 (Toray Industries, Inc.), 06 October 2016 (06.10.2016), entire text (Family: none) | 1-14 |
| A | JP 2016-801 A (Mitsubishi Chemical Corp.), 07 January 2016 (07.01.2016), entire text (Family: none) | 1-14 |

Form PCT/ISA/210 (continuation of second sheet) (January 2015)

**INTERNATIONAL SEARCH REPORT**

International application No.
PCT/JP2017/016267

C (Continuation). DOCUMENTS CONSIDERED TO BE RELEVANT

| Category* | Citation of document, with indication, where appropriate, of the relevant passages | Relevant to claim No. |
|---|---|---|
| A | WO 2014/061648 A1 (Daicel Corp.), 24 April 2014 (24.04.2014), entire text & US 2015/0232620 A1 whole document & EP 2907833 A1 & CN 104718233 A | 1-14 |
| A | WO 2008/044397 A1 (Sumitomo Bakelite Co., Ltd.), 17 April 2008 (17.04.2008), entire text & US 2010/0009149 A1 whole document & EP 2077288 A1 & KR 10-2009-0073219 A & CN 101522749 A | 1-14 |
| A | JP 2006-36862 A (Daicel Chemical Industries, Ltd.), 09 February 2006 (09.02.2006), entire text (Family: none) | 1-14 |
| A | JP 2002-3582 A (Mitsubishi Electric Corp.), 09 January 2002 (09.01.2002), entire text (Family: none) | 1-14 |
| A | JP 2-84425 A (Somar Corp.), 26 March 1990 (26.03.1990), entire text & US 4954602 A whole document & EP 349192 A2 | 1-14 |
| A | JP 62-290718 A (Hitachi, Ltd.), 17 December 1987 (17.12.1987), entire text (Family: none) | 1-14 |
| A | JP 62-7720 A (Hitachi, Ltd.), 14 January 1987 (14.01.1987), entire text (Family: none) | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013001711 A
- JP 2010171069 A
- JP 2003221490 A
- WO 2007125759 A